# EUROPEAN PATENT APPLICATION

(11) **EP 4 845 292 A1**
(43) Date of publication of application: **25.11.2026**
(21) Application number: 25782846.7
(22) Date of filing: 27.03.2025
(51) Int. Cl.: H04W 74/0833, H04W 72/23, H04W 74/00, H04B 7/0413, H04B 7/06

(54) **METHOD AND DEVICE FOR PERFORMING PHYSICAL DOWNLINK CONTROL CHANNEL ORDER-INITIATED RANDOM ACCESS IN WIRELESS COMMUNICATION SYSTEM**

(30) Priority: 03.04.2024 KR 20240045470
(71) Applicant: Hyundai Motor Company, Seoul 06797 (KR); Kia Corporation, Seoul 06797 (KR); Gachon University of Industry-Academic Cooperation Foundation, Seongnam-si, Gyeonggi-do 13120 (KR)
(72) Inventor: HONG, Ui Hyun, Hwaseong-si Gyeonggi-do 18280 (KR); SUH, Young Kil, Hwaseong-si Gyeonggi-do 18280 (KR); LEE, Jeong Su, Hwaseong-si Gyeonggi-do 18280 (KR); HAHN, Gene Back, Hwaseong-si Gyeonggi-do 18280 (KR); SON, Hyuk Min, Seoul 05698 (KR)
(74) Representative: Isarpatent
(86) International application number: PCT/KR2025/003934
(87) International publication number: WO 2025/211644

(57) **Abstract**

The present disclosure relates to performing random access that is initiated by a PDCCH order in a wireless communication system. A method of operating a terminal may include performing a first random access procedure to access a base station including a first TRP and a second TRP, receiving a PDCCH order from the first TRP, and performing a second random access procedure for the second TRP based on the PDCCH order.

## Description

### Technical Field

The present disclosure relates to a wireless communication system, and to an apparatus and a method for performing random access that is initiated by a physical downlink control channel (PDCCH) order in a wireless communication system.

### Background Art

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6 GHz and above 6 GHz. That is, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like. The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in 5G NR, Multiple Transmission and Reception Point (mTRP) technology refers to a technique in which a base station (e.g., gNB) utilizes a plurality of physically separated Transmission and Reception Points (TRPs) to perform communication with a terminal. MTRP technology can solve the problem of reduced Quality of Service (QoS) caused by terminals located at the cell edge being far from the base station, as well as the problem of inter-cell interference received from base stations located in different cells. In addition, MTRP technology can serve the role of providing an additional communication path, which is a non-line-of-sight (NLOS) path from the base station, in cases where line-of-sight (NLOS) paths from the base station are limited, such as in the millimeter wave band.

Beam management regarding TRP in 5G NR may be defined as a set of L1/L2 procedures that find or maintain an optimal beam required for the transmission and reception of the TRP and the terminal, respectively. In particular, for beam management related to analog beamforming, a transmission configuration index (TCI) was introduced to configure the terminal's reception beam for a specific channel/signal, e.g., PDSCH/CSI-RS/PDCCH. The TCI was introduced to dynamically indicate quasi-colocation (QCL) information through downlink control information (DCI) at the base station.

On the other hand, depending on the state and conditions of the communication channel, it is necessary to switch an uplink signal transmission method between a Single Transmission and Reception Point (sTRP) method and a Multiple Transmission and Reception Point method. However, the method of switching the uplink signal transmission method between the Single Transmission and Reception Point method and the Multiple Transmission and Reception Point method and the related procedure thereof are not defined. Therefore, the method of switching the uplink signal transmission method between the Single Transmission and Reception Point method and the Multiple Transmission and Reception Point method is required.

Meanwhile, the description of the background technology of the present invention is provided solely for the purpose of enhancing the understanding of the background of the present invention and may include information that is not considered the conventional technology known to a person having ordinary skill in the art.

### Disclosure

### Technical Problem

The present disclosure is directed to providing an apparatus and a method for performing PDCCH order-initiated random access in a wireless communication system.

The present disclosure is directed to providing an apparatus and a method for requesting random access to a transmission-reception point (TRP) different from a TRP that has transmitted a PDCCH order in a wireless communication system.

The present disclosure is directed to providing an apparatus and a method for indicating, through a PDCCH order, that random access to another TRP is requested in a wireless communication system.

The present disclosure is directed to providing an apparatus and a method for indicating, through a PDCCH order, that random access to another TRP is requested in a wireless communication system.

The present disclosure is directed to providing an apparatus and a method for performing random access in an asymmetric downlink (DL) single TRP (sTRP)/uplink (UL) multiple TRP (mTRP) situation in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method of operating a terminal in a wireless communication system may include performing a first random access procedure to access a base station including a first transmission-reception point (TRP) and a second TRP, receiving a physical downlink control channel (PDCCH) order from the first TRP, and performing a second random access procedure for the second TRP based on the PDCCH order.

According to an embodiment of the present disclosure, a method of operating a base station in a wireless communication system may include performing a first random access procedure for access of a terminal, transmitting a PDCCH order to the terminal through a first TRP, and performing a second random access procedure for a second TRP based on the PDCCH order.

According to an embodiment of the present disclosure, a terminal in a wireless communication system includes at least one transceiver, at least one processor, and at least one memory operably coupled to the at least one processor and storing instructions that, when executed by the processor, control the terminal to perform operations, wherein the operations may include performing a first random access procedure to access a base station including a first TRP and a second TRP, receiving a PDCCH order from the first TRP, and performing a second random access procedure for the second TRP based on the PDCCH order.

According to an embodiment of the present disclosure, a base station in a wireless communication system includes at least one transceiver, at least one processor, and at least one memory operably coupled to the at least one processor and storing instructions that, when executed by the processor, control the base station to perform operations, wherein the operations may include performing a first random access procedure for access of a terminal, transmitting a PDCCH order to the terminal through a first TRP, and performing a second random access procedure for a second TRP based on the PDCCH order.

### Advantageous Effects

The above-described aspects of the present disclosure are merely some of the preferred embodiments, and various embodiments reflecting the technical features of the present disclosure may be derived and understood by those skilled in the art based on the following detailed description of the present disclosure.

The following effects may be achieved by embodiments based on the present disclosure.

According to the present disclosure, random access to a UL TRP can be effectively performed in a wireless communication system.

According to the present disclosure, asymmetric DL sTRP/UL mTRP access and operation can be enabled in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a conceptual diagram illustrating an embodiment of a communication system.
FIG. 2 is a block diagram illustrating an embodiment of a communication node constituting a communication system.
FIG. 3 is a block diagram illustrating an embodiment of wireless devices performing communication.
FIG. 4A is a block diagram illustrating an embodiment of a transmission path.
FIG. 4B is a block diagram illustrating an embodiment of a reception path.
FIG. 5 is a conceptual diagram illustrating an embodiment of a system frame in a communication system.
FIG. 6 is a conceptual diagram illustrating an embodiment of a subframe in a communication system.
FIG. 7 is a conceptual diagram illustrating an embodiment of a slot in a communication system.
FIG. 8 is a conceptual diagram illustrating an embodiment of a time-frequency resource in a communication system.
FIG. 9 shows an example of a QCL relationship between reference signals applicable to the present disclosure.
FIG. 10 shows an example of a procedure for establishing a beam by integrating a plurality of channels or reference signals through a unified TCI state according to an embodiment of the present disclosure.
FIG. 11 shows an example of a configuration procedure of each layer to transmit a TCI state in an M-TRP structure according to an embodiment of the present disclosure.
FIG. 12 illustrates an example of a procedure for performing random access of a terminal according to an embodiment of the present disclosure.
FIG. 13 illustrates an example of a procedure for performing random access of a base station according to an embodiment of the present disclosure.
FIG. 14 illustrates a first example of a procedure for performing random access to a UL TRP according to an embodiment of the present disclosure.
FIG. 15 illustrates a second example of a procedure for performing random access to a UL TRP according to an embodiment of the present disclosure.
FIG. 16 illustrates a third example of a procedure for performing random access to a UL TRP according to an embodiment of the present disclosure.
FIG. 17 illustrates an example of a procedure for performing random access using beam sweeping according to an embodiment of the present disclosure.
FIG. 18 illustrates an example of a structure of a slot in which beam sweeping is performed according to an embodiment of the present disclosure.
FIG. 19 illustrates an example of random access occasions (RAOs) for random access according to an embodiment of the present disclosure.

### DETAILED DESCRIPTION OF EXEMPLARY EMBODIMENTS

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)). In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

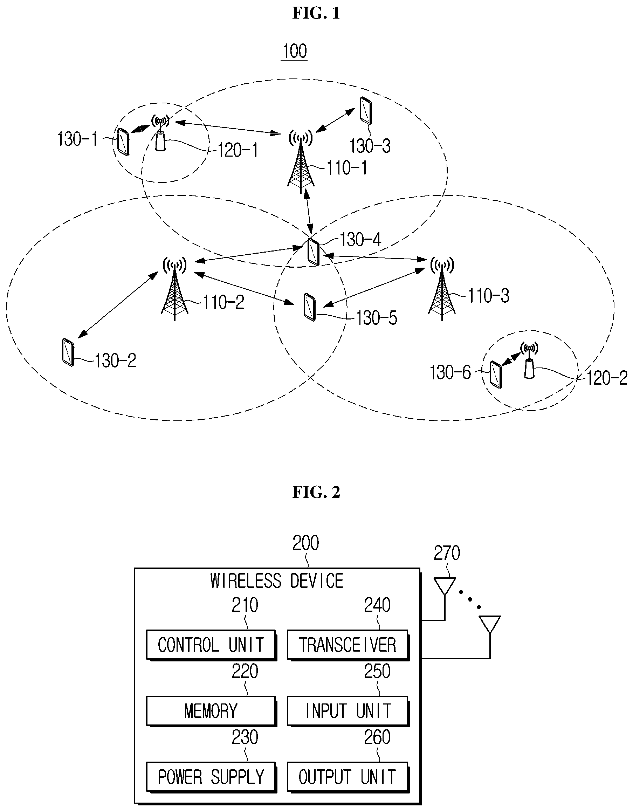

FIG. 1 is a conceptual diagram illustrating an embodiment of a communication system.

Referring to FIG. 1, the communication system 100 may include a plurality of communication nodes 110-1, 110-2, 110-3, 120-1, 120-2, 130-1, 130-2, 130-3, 130-4, 130-5 and 130-6. Additionally, the communication system 100 may further include a core network (e.g., an S-GW (serving-gateway), a P-GW (PDN (packet data network)-gateway), and an MME (mobility management entity)). If the communication system 100 is a 5G communication system (e.g., a new radio (NR) system), the core network may include an AMF (access and mobility management function), a UPF (user plane function), an SMF (session management function), etc.

The plurality of communication nodes 110 to 130 may support communication protocols defined in 3GPP (3rd generation partnership project) standards (e.g., LTE communication protocol, LTE-A communication protocol, NR communication protocol, etc.). The plurality of communication nodes 110 to 130 may support CDMA (code division multiple access) technology, WCDMA (wideband CDMA) technology, TDMA (time division multiple access) technology, FDMA (frequency division multiple access) technology, OFDM (orthogonal frequency division multiplexing) technology, Filtered OFDM technology, CP (cyclic prefix)-OFDM technology, DFT-s-OFDM (discrete Fourier transform-spread-OFDM) technology, OFDMA (orthogonal frequency division multiple access) technology, SC (single carrier)-FDMA technology, NOMA (non-orthogonal multiple access) technology, GFDM (generalized frequency division multiplexing) technology, FBMC (filter bank multi-carrier) technology, UFMC (universal filtered multi-carrier) technology, SDMA (space division multiple access) technology, etc. Each of the plurality of communication nodes may have the following structure.

FIG. 2 is a block diagram illustrating an embodiment of a communication node constituting a communication system.

FIG. 2 is a drawing showing an example of a wireless device 200 in a wireless communication system according to one embodiment of the present disclosure. The wireless device 200 according to an embodiment of the present disclosure may be a mobile terminal such as a smartphone, tablet PC, or wearable device, but may not be limited thereto.

Referring to FIG. 2, the wireless device 200 may include at least one control unit 210, at least one memory 220, at least one power supply 230, at least one transceiver 240, at least one input unit 250, at least one output unit 260 and/or at least one antenna 270.

The control unit 210 may control the memory 220 and/or the transceiver 240 and may be configured to implement the descriptions, functions, procedures, proposals, methods, and/or flowcharts disclosed in this disclosure. The memory 220 may be connected to the control unit 210 and may store various information related to the operation of the control unit 210. For example, the memory 220 may store software code including instructions for performing some or all of controls controlled by the control unit 210 or for performing the descriptions, functions, procedures, proposals, methods, and/or flowcharts disclosed in this disclosure. The configuration of the memory is not limited in a particular way. For example, it may be configured as at least one of read-only memory (ROM) and random access memory (RAM).

At least one control unit 210 may be referred to as a controller, microcontroller, microprocessor, or microcomputer. The descriptions, functions, procedures, proposals, methods, and/or flowcharts disclosed in this disclosure may be implemented using firmware or software in the form of code, instructions, and/or sets of instructions. Here, the firmware or software may execute other programs stored in the memory 220, such as an OS. The control unit 210 may be implemented to support differently weighted beamforming or directional routing operations to effectively control an outgoing signal from at least one antenna 270 in a desired direction.

Additionally, at least one control unit 210 may be coupled with a backhaul or network interface. The wireless device 200 may communicate with other wireless devices through the backhaul or network interface. The control unit 210 may include at least one processor. The processor may mean a central processing unit (CPU), a graphics processing unit (GPU), or a dedicated processor on which the methods according to embodiments of the present disclosure are performed.

At least one transceiver 240 may be connected to the control unit 210 and may transmit and/or receive a wireless signal through at least one antenna 270. The transceiver 240 may include a transmitter and/or a receiver. At least one transceiver 240 may transmit user data, control information, wireless signals/channels, etc., as described in the methods and/or flowcharts of the present disclosure to at least one other device. For example, at least one transceiver 240 may be connected to at least one control unit 210 and may transmit and receive wireless signals. Additionally, at least one control unit 210 may control at least one transceiver 240 to transmit user data, control information, or wireless signals to at least one other device. At least one transceiver 240 may receive a signal transmitted by another wireless device through at least one antenna 270. Additionally, at least one transceiver 240 may down-convert or up-convert the received signal to generate a baseband signal. At least one antenna 270 may be a plurality of physical antennas or a plurality of logical antennas (e.g., antenna ports).

The input unit 250 may acquire information such as user input, video, and audio, and may include various input means such as various mechanical/electronic input means, cameras, and microphones. The output unit 260 provides information to a user by generating output related to sight, hearing, or touch, and may include a display, speaker, vibration module, etc. The wireless device 200 supplies power through the power supply 230, and the power supply 230 may include a wired/wireless charging circuit, battery, etc.

Referring again to FIG. 1, the communication system 100 may include a plurality of base stations 110-1, 110-2, 110-3, 120-1 and 120-2 and a plurality of terminals 130-1, 130-2, 130-3, 130-4, 130-5 and 130-6. Each of the first base station 110-1, the second base station 110-2, and the third base station 110-3 may form a macro cell. Each of the fourth base station 120-1 and the fifth base station 120-2 may form a small cell. The fourth base station 120-1, the third terminal 130-3, and the fourth terminal 130-4 may be located within the cell coverage of the first base station 110-1. The second terminal 130-2, the fourth terminal 130-4, and the fifth terminal 130-5 may be located within the cell coverage of the second base station 110-2. The fifth base station 120-2, the fourth terminal 130-4, the fifth terminal 130-5, and the sixth terminal 130-6 may be located within the cell coverage of the third base station 110-3. The first terminal 130-1 may be located within the cell coverage of the fourth base station 120-1. The sixth terminal 130-6 may be located within the cell coverage of the fifth base station 120-2.

Here, each of the plurality of base stations 110-1, 110-2, 110-3, 120-1 and 120-2 may be referred to as NB (NodeB), eNB (evolved NodeB), gNB, ABS (advanced base station), HR-BS (high reliability-base station), BTS (base transceiver station), radio base station, radio transceiver, access point, access node, RAS (radio access station), MMR-BS (mobile multihop relay-base station), RS (relay station), ARS (advanced relay station), HR-RS (high reliability-relay station), HNB (home NodeB), HeNB (home eNodeB), RSU (road side unit), RRH (radio remote head), TP (transmission point), TRP (transmission and reception point), etc.

Each of the plurality of terminals 130-1, 130-2, 130-3, 130-4, 130-5 and 130-6 may be referred to as UE (user equipment), TE (terminal equipment), AMS (advanced mobile station), HR-MS (high reliability-mobile station), terminal, access terminal, mobile terminal, station, subscriber station, mobile station, portable subscriber station, node, device, OBU (on board unit), etc.

Meanwhile, each of the plurality of base stations 110-1, 110-2, 110-3, 120-1 and 120-2 may operate in different frequency bands or in the same frequency band. Each of the plurality of base stations 110-1, 110-2, 110-3, 120-1 and 120-2 may be connected to each other via an ideal backhaul link or a non-ideal backhaul link, and may exchange information with each other via an ideal backhaul link or a non-ideal backhaul link. Each of the plurality of base stations 110-1, 110-2, 110-3, 120-1 and 120-2 may be connected to a core network via an ideal backhaul link or a non-ideal backhaul link. Each of the multiple base stations 110-1, 110-2, 110-3, 120-1 and 120-2 may transmit a signal received from the core network to the corresponding terminal 130-1, 130-2, 130-3, 130-4, 130-5 or 130-6, and may transmit a signal received from the corresponding terminal 130-1, 130-2, 130-3, 130-4, 130-5 or 130-6 to the core network.

In addition, each of the plurality of base stations 110-1, 110-2, 110-3, 120-1 and 120-2 may support MIMO transmission (e.g., SU (single user)-MIMO, MU (multi user)-MIMO, massive MIMO, etc.), CoMP (coordinated multipoint) transmission, carrier aggregation (CA) transmission, transmission in an unlicensed band, sidelink communication (e.g., D2D (device to device communication), ProSe (proximity services)), IoT (Internet of Things) communication, dual connectivity (DC), etc. Here, each of the plurality of terminals 130-1, 130-2, 130-3, 130-4, 130-5 and 130-6 may perform an operation corresponding to the base station 110-1, 110-2, 110-3, 120-1 or 120-2 and an operation supported by the base station 110-1, 110-2, 110-3, 120-1or 120-2. For example, the second base station 110-2 may transmit a signal to the fourth terminal 130-4 based on the SU-MIMO method, and the fourth terminal 130-4 may receive a signal from the second base station 110-2 by the SU-MIMO method. Alternatively, the second base station 110-2 may transmit a signal to the fourth terminal 130-4 and the fifth terminal 130-5 based on the MU-MIMO method, and each of the fourth terminal 130-4 and the fifth terminal 130-5 may receive a signal from the second base station 110-2 by the MU-MIMO method.

Each of the first base station 110-1, the second base station 110-2, and the third base station 110-3 may transmit a signal to the fourth terminal 130-4 based on the CoMP method, and the fourth terminal 130-4 may receive a signal from the first base station 110-1, the second base station 110-2, and the third base station 110-3 by the CoMP method. Each of the plurality of base stations 110-1, 110-2, 110-3, 120-1 and 120-2 may transmit and receive signals based on the CA method to and from the terminals 130-1, 130-2, 130-3, 130-4, 130-5 and 130-6 within its cell coverage area. Each of the first base station 110-1, the second base station 110-2, and the third base station 110-3 may control sidelink communication between the fourth terminal 130-4 and the fifth terminal 130-5, and each of the fourth terminal 130-4 and the fifth terminal 130-5 may perform sidelink communication by control of each of the second base station 110-2 and the third base station 110-3.

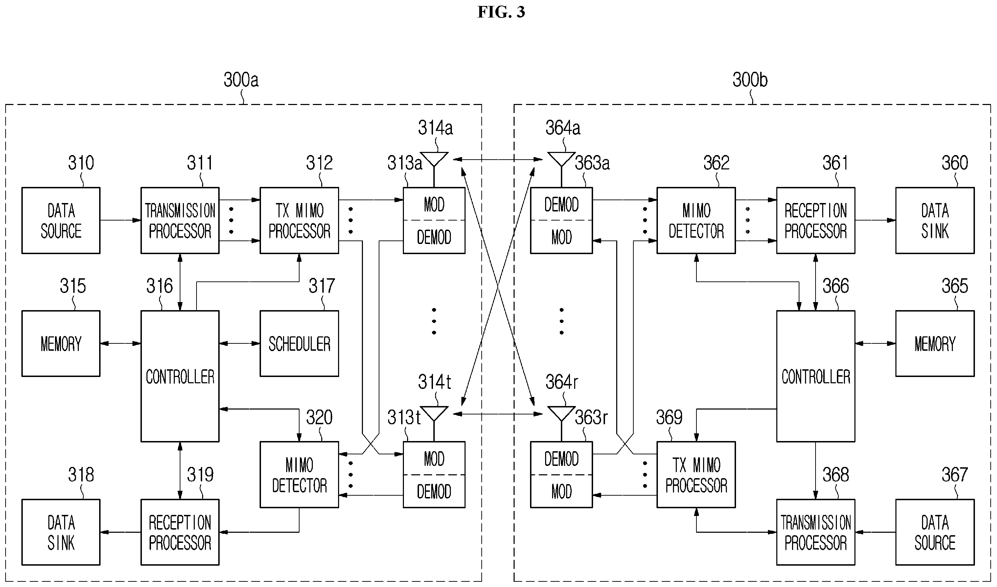

Meanwhile, communication nodes performing communication in a communication network may be configured as follows. The communication node shown in FIG. 3 may be a specific embodiment of the wireless device shown in FIG. 2.

FIG. 3 is a block diagram illustrating an embodiment of wireless devices performing communication.

Referring to FIG. 3, each of a first wireless device 300a and a second wireless device 300b may be a base station or a UE. The first wireless device 300a may transmit a signal to the second wireless device 300b. A transmission processor 311 included in the first wireless device 300a may receive data (e.g., a data unit) from a data source 310. The transmission processor 311 may receive control information from a controller 316. The control information may include at least one of system information, RRC configuration information (e.g., information set by RRC signaling), MAC control information (e.g., MAC CE), or PHY control information (e.g., DCI, SCI).

The transmission processor 311 may generate data symbol(s) by performing processing operations (e.g., encoding operations, symbol mapping operations, etc.) on data. The transmission processor 311 may generate control symbol(s) by performing processing operations (e.g., encoding operations, symbol mapping operations, etc.) on control information. Additionally, the transmission processor 311 may generate synchronization/reference symbol(s) for synchronization signals and/or reference signals.

A Tx MIMO processor 312 may perform spatial processing operations (e.g., precoding operations) on data symbol(s), control symbol(s), and/or synchronization/reference symbol(s). The output of the Tx MIMO processor 312 (e.g., a symbol stream) may be provided to modulators (MODs) included in transceivers 313a to 313t. The modulators (MODs) may perform processing operations on the symbol stream to generate modulated symbols and perform additional processing operations (e.g., analog conversion operations, amplification operations, filtering operations, up-conversion operations) on the modulated symbols to generate signals. The signals generated by the modulators (MODs) of the transceivers 313a to 313t may be transmitted through antennas 314a to 314t.

Signals transmitted by the first wireless device 300a may be received at the antennas 364a to 364r of the second wireless device 300b. Signals received at the antennas 364a to 364r may be provided to demodulators (DEMODs) included in transceivers 363a to 363r. The demodulators (DEMODs) may obtain samples by performing processing operations on the signals (e.g., filtering operation, amplification operation, down-conversion operation, digital conversion operation). The demodulators (DEMODs) may obtain symbols by performing additional processing operations on the samples. A MIMO detector 362 may perform MIMO detection operations on the symbols. A reception processor 361 may perform processing operations on the symbols (e.g., deinterleaving operation, decoding operation). The output of the reception processor 361 may be provided to a data sink 360 and a controller 366. For example, data may be provided to the data sink 360, and control information may be provided to the controller 366.

Meanwhile, the second wireless device 300b may transmit a signal to the first wireless device 300a. The transmission processor 368 included in the second wireless device 300b may receive data (e.g., a data unit) from a data source 367 and may generate data symbol(s) by performing a processing operation on the data. The transmission processor 368 may receive control information from a controller 366 and may generate control symbol(s) by performing a processing operation on the control information. Additionally, the transmission processor 368 may generate reference symbol(s) by performing a processing operation on a reference signal.

A Tx MIMO processor 369 may perform spatial processing operations (e.g., precoding operations) on data symbol(s), control symbol(s), and/or reference symbol(s). The output (e.g., a symbol stream) of the Tx MIMO processor 369 may be provided to modulators (MODs) included in transceivers 363a to 363t. The modulators (MODs) may perform processing operations on the symbol stream to generate modulated symbols and perform additional processing operations (e.g., analog conversion operations, amplification operations, filtering operations, up-conversion operations) on the modulated symbols to generate signals. The signals generated by the modulators (MODs) of the transceivers 363a to 363t may be transmitted through antennas 364a to 364t.

Signals transmitted by the second wireless device 300b may be received at the antennas 314a to 314r of the first wireless device 300a. Signals received from the antennas 314a to 314r may be provided to demodulators (DEMODs) included in transceivers 313a to 313r. The demodulators (DEMODs) may obtain samples by performing processing operations (e.g., filtering operation, amplification operation, down-conversion operation, digital conversion operation) on the signal. The demodulators (DEMODs) may obtain symbols by performing additional processing operations on the samples. A MIMO detector 320 may perform a MIMO detection operation on the symbols. The reception processor 319 may perform processing operations (e.g., deinterleaving operation, decoding operation) on the symbols. The output of the reception processor 319 may be provided to a data sink 318 and a controller 316. For example, data may be provided to the data sink 318 and control information may be provided to the controller 316.

Memories 315 and 365 may store data, control information, and/or program code. A scheduler 317 may perform scheduling operations for communication. The processors 311, 312, 319, 361, 368 and 369 and controllers 316 and 366 shown in FIG. 3 may be the processor 210 shown in FIG. 2 and may be used to perform the methods described in this disclosure.

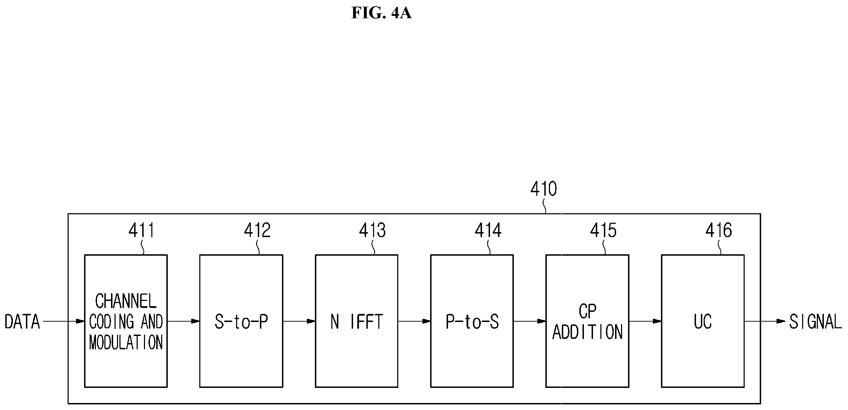

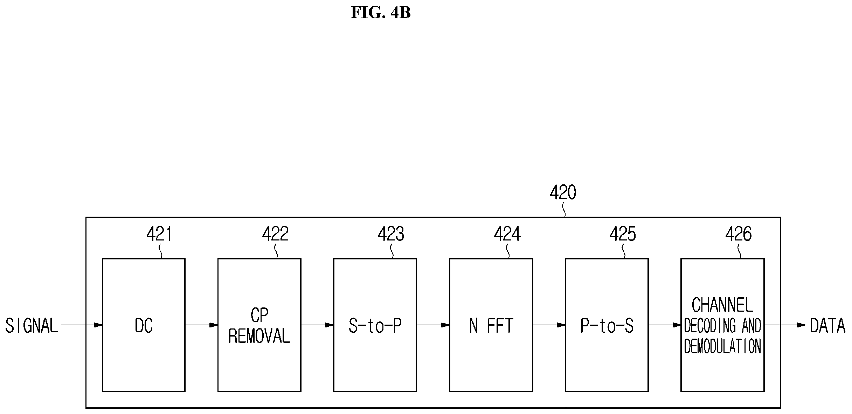

FIG. 4a is a block diagram illustrating an embodiment of a transmission path, and FIG. 4b is a block diagram illustrating an embodiment of a reception path.

Referring to FIGS. 4a and 4b, a transmission path 410 may be implemented at a communication node that transmits a signal, and a reception path 420 may be implemented at a communication node that receives a signal. The transmission path 410 may include a channel coding and modulation block 411, an S-to-P (serial-to-parallel) block 412, an N IFFT (Inverse Fast Fourier Transform) block 413, a P-to-S (parallel-to-serial) block 414, a CP (cyclic prefix) addition block 415, and an UC (up-converter) (UC) 416. The reception path 420 may include a DC (down-converter) 421, a CP removal block 422, an S-to-P block 423, an N FFT block 424, a P-to-S block 425, and a channel decoding and demodulation block 426. Here, N may be a natural number.

Information bits in the transmission path 410 may be input to the channel coding and modulation block 411. The channel coding and modulation block 411 may perform coding operations (e.g., LDPC (low-density parity check) (LDPC) coding operations, polar coding operations, etc.) and modulation operations (e.g., QPSK (Quadrature Phase Shift Keying), QAM (Quadrature Amplitude Modulation), etc.) on the information bits. The output of the channel coding and modulation block 411 may be a sequence of modulation symbols.

The S-to-P block 412 may convert modulated symbols in the frequency domain into parallel symbol streams to generate N parallel symbol streams. N may be the IFFT size or the FFT size. The N IFFT block 413 may generate signals in the time domain by performing an IFFT operation on the N parallel symbol streams. The P-to-S block 414 may convert the output (e.g., parallel signals) of the N IFFT block 413 into a serial signal to generate a serial signal.

The CP addition block 415 may insert CP into the signal. The UC 416 may up-convert the frequency of the output of the CP addition block 415 into an RF (radio frequency) frequency. Additionally, the output of the CP addition block 415 may be filtered in the baseband before up-conversion.

A signal transmitted from the transmission path 410 may be input to the reception path 420. The operation in the reception path 420 may be the inverse operation of the operation in the transmission path 410. The DC 421 may down-convert the frequency of the received signal into a baseband frequency. The CP removal block 422 may remove CP from the signal. The output of the CP removal block 422 may be a serial signal. The S-to-P block 423 may convert the serial signal into parallel signals. The N FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and reconstruct data by performing a decoding operation on the result of the demodulation operation.

In FIGS. 4a and 4b, Discrete Fourier Transform (DFT) and Inverse DFT (IDFT) may be used instead of FFT and IFFT. In FIGS. 4a and 4b, each of the blocks (e.g., components) may be implemented by at least one of hardware, software, or firmware. For example, in FIGS. 4a and 4b, some blocks may be implemented by software, and the remaining blocks may be implemented by hardware or a "combination of hardware and software." In FIGS. 4a and 4b, one block may be subdivided into multiple blocks, multiple blocks may be unified into one block, some blocks may be omitted, and blocks supporting other functions may be added.

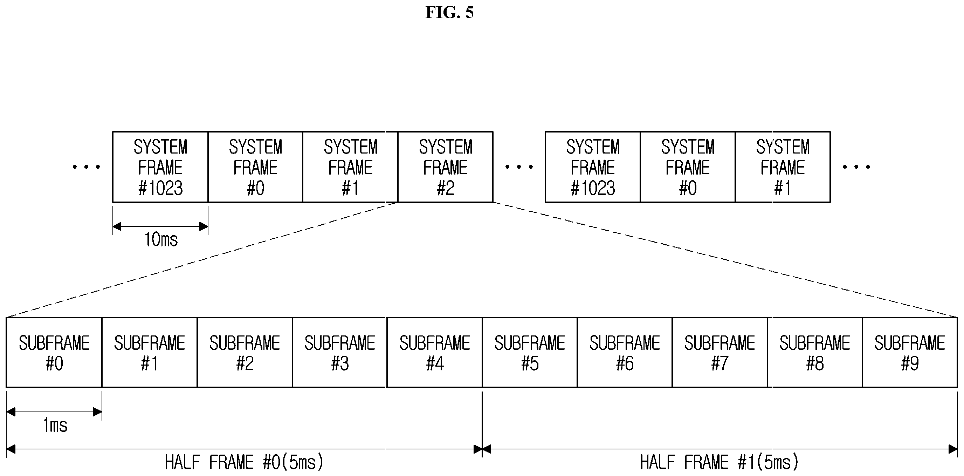

FIG. 5 is a conceptual diagram illustrating an embodiment of a system frame in a communication system.

Referring to FIG. 5, time resources in a communication system may be divided into frames. For example, system frames may be configured consecutively in the time domain of the communication system. The length of a system frame may be 10 ms (millisecond). The system frame number (SFN) may be set from #0 to #1023. In this case, 1024 system frames may be repeated in the time domain of the communication system. For example, the SFN of the system frame after system frame #1023 may be #0.

A single system frame may include two half frames. The length of a single half frame may be 5 ms. A half frame located at the start area of the system frame may be referred to as "Half Frame #0", and a half frame located at the end area of the system frame may be referred to as "Half Frame #1". A system frame may include 10 subframes. The length of a single subframe may be 1 ms. Within a single system frame, 10 subframes may be referred to as "Subframe #0-9".

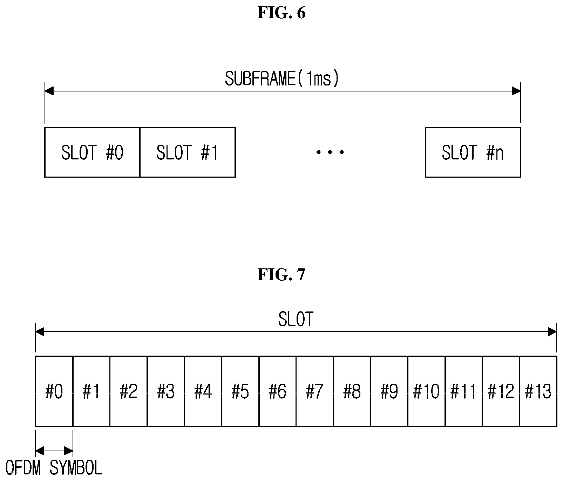

FIG. 6 is a conceptual diagram illustrating an embodiment of a subframe in a communication system.

Referring to FIG. 6, one subframe may include n slots, where n is a natural number. Thus, one subframe may consist of one or more slots.

FIG. 7 is a conceptual diagram illustrating an embodiment of a slot in a communication system.

Referring to FIG. 7, a slot may include one or more symbols. The slot illustrated in FIG. 7 may include 14 symbols. The length of the slot may vary depending on the number of symbols included in the slot and the length of the symbols. Alternatively, the length of the slot may vary depending on the numerology.

Numerology applied to physical signals and channels in a communication system may be variable. Numerology may vary to meet various technical requirements of the communication system. In a communication system to which CP (cyclic prefix) based OFDM waveform technology is applied, numerology may include subcarrier spacing and CP length (or CP type). Table 1 may show an embodiment of a method for configuring numerology for a CP-OFDM based communication system. Depending on the frequency band in which the communication system operates, at least some of numerologies in Table 1 may be supported. Additionally, numerology(numerologies) not listed in [Table 1] may be further supported in the communication system.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1 ms | 14 | 28 | 56 | 112 | 224 | 448 |

When the subcarrier spacing is 15 kHz (e.g., µ=0), the slot length may be 1 ms. In this case, one system frame may include 10 slots. When the subcarrier spacing is 30 kHz (e.g., µ=1), the slot length may be 0.5 ms. In this case, one system frame may include 20 slots.

When the subcarrier spacing is 60 kHz (e.g., µ=2), the slot length may be 0.25 ms. In this case, one system frame may include 40 slots. When the subcarrier spacing is 120 kHz (e.g., µ=3), the slot length may be 0.125 ms. In this case, one system frame may include 80 slots. When the subcarrier spacing is 240 kHz (e.g., µ=4), the slot length may be 0.0625 ms. In this case, one system frame may may 160 slots.

The symbol may be set as a downlink (DL) symbol, a flexible (FL) symbol, or an uplink (UL) symbol. A slot consisting only of a DL symbol may be referred to as a "DL slot," a slot consisting only of an FL symbol may be referred to as an "FL slot," and a slot consisting only of a UL symbol may be referred to as an "UL slot."

The slot format may be semi-fixedly configured by upper layer signaling (e.g., RRC signaling). Information indicating the semi-fixed slot format may be included in system information, and the semi-fixed slot format may be configured cell-specifically. Additionally, the semi-fixed slot format may be additionally configured per terminal through terminal-specific upper layer signaling (e.g., RRC signaling). The flexible symbols of the cell-specific slot format may be overridden as downlink symbols or uplink symbols by the terminal-specific upper layer signaling. Furthermore, the slot format may be dynamically indicated by physical layer signaling (e.g., the SFI (slot format indicator) included in the DCI). The semi-fixedly configured slot format may be overridden by the dynamically indicated slot format. For example, the semi-fixedly configured flexible symbols may be overridden as downlink symbols or uplink symbols by the SFI.

The reference signal may be a CSI-RS (channel state information-reference signal), SRS (sounding reference signal), DM-RS (demodulation-reference signal), PT-RS (phase tracking-reference signal), etc. The channel may be a PBCH (physical broadcast channel), PDCCH (physical downlink control channel), PDSCH (physical downlink shared channel), PUCCH (physical uplink control channel), PUSCH (physical uplink shared channel), PSCCH (physical sidelink control channel), PSSCH (physical sidelink shared channel), etc. In the present disclosure, the control channel may mean PDCCH, PUCCH, or PSCCH, and the data channel may mean PDSCH, PUSCH, or PSSCH.

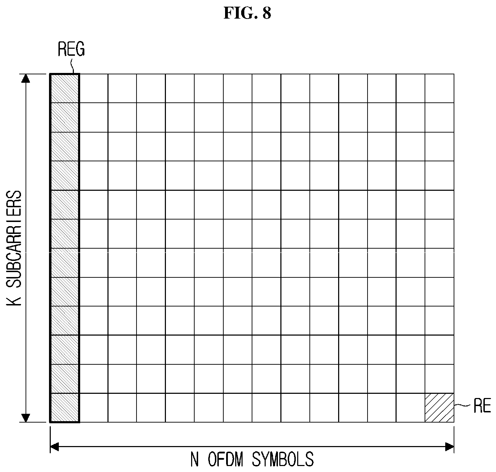

FIG. 8 is a conceptual diagram illustrating an embodiment of a time-frequency resource in a communication system.

Referring to FIG. 8, a resource consisting of one symbol (e.g., an OFDM symbol) in the time domain and one subcarrier in the frequency domain may be defined as a "RE (resource element)." A resource consisting of one OFDM symbol in the time domain and K subcarriers in the frequency domain may be defined as a "REG (resource element group)." A REG may include K REs. A REG may be used as the basic unit of resource allocation in the frequency domain. K may be a natural number. For example, K may be 12. N may be a natural number. In the slot illustrated in FIG. 7, N may be 14. N OFDM symbols may be used as the basic unit of resource allocation in the time domain.

In the present disclosure, an RB may mean a common RB (CRB). Alternatively, an RB may mean a PRB or a virtual RB (VRB). In a communication system, a CRB may mean an RB that constitutes a set of consecutive RBs (e.g., a common RB grid) based on a reference frequency (e.g., point A). A carrier and/or bandwidth portion may be placed on the common RB grid. That is, the carrier and/or bandwidth portion may be composed of CRB(s). An RB or CRB constituting the bandwidth portion may be referred to as a PRB, and within the bandwidth portion, a CRB index may be appropriately converted into a PRB index.

Downlink data may be transmitted via a PDSCH. A base station may transmit configuration information (e.g., scheduling information) of the PDSCH to a terminal via a PDCCH. The terminal may obtain the configuration information of the PDSCH by receiving the PDCCH (e.g., downlink control information (DCI)). For example, the configuration information of the PDSCH may include a modulation coding scheme (MCS) used for transmitting and receiving the PDSCH, time resource information of the PDSCH, frequency resource information of the PDSCH, feedback resource information for the PDSCH, etc. The PDSCH may refer to a radio resource where downlink data is transmitted and received. Alternatively, the PDSCH may refer to the downlink data itself. The PDCCH may refer to a radio resource where downlink control information (e.g., DCI) is transmitted and received. Alternatively, the PDCCH may refer to downlink control information itself.

The terminal may perform a monitoring operation for the PDCCH to receive the PDSCH transmitted from the base station. The base station may notify the terminal of configuration information for the monitoring operation of the PDCCH using a higher-layer message (e.g., a radio resource control (RRC) message). The configuration information for the monitoring operation of the PDCCH may include CORESET (control resource set) information and search space information.

The CORESET information may include PDCCH DMRS (demodulation reference signal) information, PDCCH precoding information, PDCCH occasion information, etc. The PDCCH DMRS may be a DMRS used to demodulate the PDCCH. A PDCCH occasion may be an area where the PDCCH may exist. That is, a PDCCH occasion may be an area where the DCI may be transmitted. A PDCCH occasion may be referred to as a PDCCH candidate. The PDCCH occasion information may include time resource information and frequency resource information of the PDCCH occasion. In the time domain, the length of the PDCCH occasion may be indicated in units of symbols. In the frequency domain, the size of the PDCCH occasion may be indicated in units of RBs (e.g., units of physical resource blocks (PRBs) or common resource blocks (CRBs)).

The search space information may include a CORESET ID (identifier) associated with the search space, the period of PDCCH monitoring, and/or an offset. The period of PDCCH monitoring and the offset may each be specified in slot units. Additionally, the search space information may further include the index of the symbol where the PDCCH monitoring operation begins.

The base station may configure a Bandwidth Part (BWP) for downlink communication. BWP may be configured differently for each terminal. The base station may notify the terminal of the configuration information of the BWP using upper layer signaling. Upper layer signaling may refer to "transmission operations of system information" and/or "transmission operations of Radio Resource Control (RRC) messages." One or more BWPs may be configured for a single terminal. The terminal may receive the configuration information of the BWP from the base station and identify the BWP(s) configured by the base station based on the configuration information of the BWP. If multiple BWPs are configured for downlink communication, the base station may activate one or more of the multiple BWPs. The base station may transmit the configuration information of the activated BWP(s) to the terminal using at least one of upper layer signaling, a Medium Access Control (MAC) Control Element (CE), or DCI. The base station may perform downlink communication using the activated BWP(s). The terminal may identify the activated BWP(s) by receiving the configuration information of the activated BWP(s) from the base station, and may perform a downlink reception operation on the activated BWP(s).

Multiple Transmission and Reception Point (MTRP) technology refers to a technique in which a base station (e.g., gNB) utilizes multiple Transmission and Reception Points (TRPs) separated physically to communicate with a terminal. By utilizing multiple TRPs, MTRP technology can resolve the problem of reduced Quality of Service (QoS) caused by terminals located at the cell edge being far from the base station, while simultaneously addressing inter-cell interference problems arising from base stations located in different cells. Furthermore, MTRP technology may serve the role of providing an additional communication path, which is a Non-Line-of-Sight (NLOS) path from the base station, in cases where the Line-of-Sight (LOS) path from the base station is limited, such as in the millimeter wave band.

In the standard, MTRP technology is divided into Coherent Joint Transmission (CJT) and Non-Coherent Joint Transmission (NCJT). The CJT method enables two or more TRPs to cooperate in a synchronized manner to support data transmission to a single terminal, based on a stable backhaul link between the TRP and the connected base station. On the other hand, the NCJT method is a method in which, when two or more TRPs support a single terminal, scheduling, precoding matrix selection, modulation, and coding schemes are determined without mutual cooperation between the TRPs.

Beam management for TRPs in 5G NR may be defined as a set of L1/L2 procedures that find or maintain an optimal beam required for transmission and reception of the TRP and the terminal, respectively. Beam management procedures may be broadly classified into four categories as follows.
1) beam determination
2) beam measurement
3) beam reporting
4) beam sweeping

Here, the TRP and the UE may utilize the reciprocity characteristics of the downlink (DL) and uplink (UL) channels during beam management. For example, the UE may utilize values measured from the receive beams (Rx beams) of the DL channel when configuring the transmit beam (Tx beam). Additionally, the UE may utilize values measured from the transmit beams (Tx beams) of the UL channel when configuring the receive beam (Rx beam). These transmit and receive beam configuration procedures may be performed in the same way for the base station as for the UE. In particular, a transmission configuration indicator (TCI) has been introduced for beam management related to analog beamforming. The TCI may be used to configure the beam to be used for transmission of a specific channel and/or signal, e.g., PDSCH and/or CSI-RS and/or PDCCH. The base station may dynamically instruct the UE on quasi-colocation (QCL) information by transmitting the TCI through downlink control information (DCI).

Two antenna ports being quasi-co-located means that the channel characteristics of a symbol transmitted from one antenna port may be inferred from the channel of a symbol transmitted from another antenna port. For the convenience of explanation below, when two antenna ports are quasi-co-located, the two antenna ports will be referred to as being in a QCL relationship.

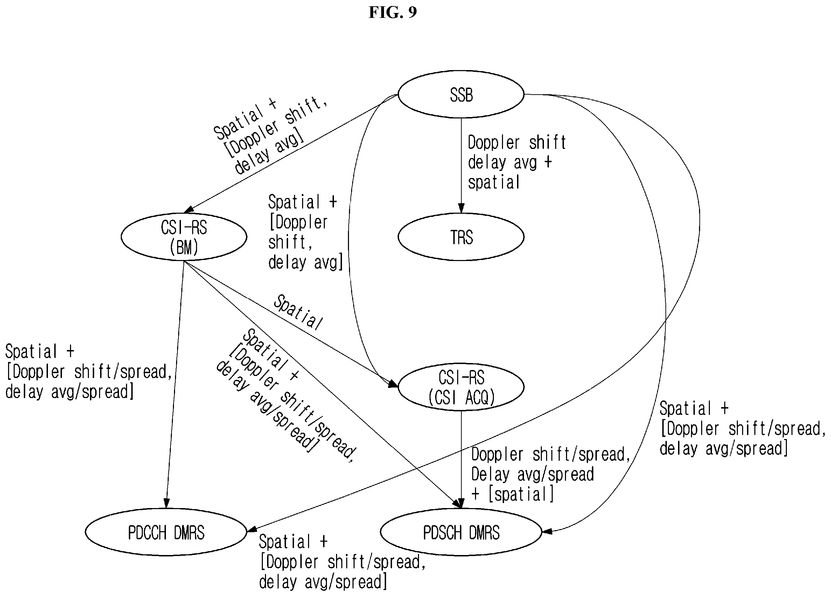

FIG. 9 shows an example of a QCL relationship between reference signals applicable to the present disclosure.

Referring to FIG. 9, information on a TCI state may be generated by extending and applying the QCL relationship between reference signals of 5G or lower.

A synchronization signal block (SSB) may be used for a terminal to synchronize with a network and obtain basic information. The SSB may have a QCL relationship with a tracking reference signal (TRS). Therefore, when receiving the TRS, at least one of the Doppler shift, delay average, and spatial characteristics of the SSB may be utilized.

CSI-RS (channel state information - reference signal): CSI-RS may be used by a network to determine the characteristics of a wireless channel. Two types of CSI-RS may exist. CSI-RS (CSI ACQ) may be used for CSI reception, and CSI-RS (BM) may be used for beam management (BM).

SSB and CSI-RS (BM) may have a QCL relationship with CSI-RS (CSI ACQ), and at least one of the Doppler shift, delay average and spatial characteristics may be used for CSI-RS (CSI ACQ) reception.

CSI-RS(BM) and SSB may have a QCL relationship with PDCCH DMRS (physical downlink control channel demodulation reference signal), and at least one of Doppler shift/spread and delay average/spread and spatial characteristics may be used for reception of PDCCH DMRS.

SSB, CSI-RS (BM), and CSI-RS (CSI ACQ) may have a QCL relationship with PDSCH DMRS, and at least one of Doppler shift/spread and delay average/spread and spatial characteristics may be used for reception of PDCCH DMRS.

3GGP Rel-17 introduced a TCI configuration method utilizing a unified TCI pool, that is, a unified TCI framework, to reduce signaling overhead for QCL configuration of DL and/or UL channels and to simplify multi-beam operations compared to releases prior to 3GGP Rel-16.

According to the unified TCI framework, a base station may pre-configure a common TCI pool that may be used (or applied) commonly for DL channels and UL channels via RRC signaling. Furthermore, according to the unified TCI framework, the base station may directly indicate the TCI for DL channels and UL channels in the configured common TCI pool using Medium Access Control (MAC) control elements (CE) (MAC-CE) and downlink control information (DCI). Additionally, according to the unified TCI framework, the base station may support updates to the common TCI state.

The common TCI state may be indicated (or set) for a plurality of component carriers (CCs). Among the plurality of CCs, a reference CC may be additionally set, and TCI updates for other CCs existing in the indicated list may be performed simultaneously through an update command for the reference CC.

At this time, the method of setting the TCI state may broadly include three methods for the DL channel and UL channel as follows:
A. Joint TCI state indication method, which provides common indications for both DL and UL channels
B. DL channel separate TCI state indication method, which configures the TCI separately for the DL channel and
C. UL channel separate TCI state indication method

Looking at the three methods above from a broader perspective, they may be classified into a joint TCI state indication method that provides common indications for the DL and UL channels, and a separate TCI state indication method that configures the TCI separately for the DL channel or UL channel, respectively. A fundamental difference between the two classification methods above may be whether or not mutuality exists between the DL channel and the UL channel.

The unified TCI framework was designed with the goal of a single TRP (sTRP) in 3GPP Rel-17. However, in 3GPP Rel-18, it aims to expand to a multi-TRP (mTRP) system.

TCI states may be used to convey QCL relationships to terminals. TCI states contain information on QCL relationships and may be conveyed via DCI. Section 5.1.5 of 3GPP TS 38.214 defines the procedure for conveying information on QCLs as follows.

**[Table 2]**

| | |
|---|---|
| 5.1.5 Antenna ports quasi co-location | |
| The UE can be configured with a list of up to *M TCI-State* configurations within the higher layer parameter *PDSCH-Config* to decode PDSCH according to a detected PDCCH with DCI intended for the UE and the given | |
| serving cell, where M depends on the UE capability *maxNumberConfiguredTCIstatesPerCC.* Each *TCI-State* contains parameters for configuring a quasi co-location relationship between one or two downlink reference signals and the DM-RS ports of the PDSCH, the DM-RS port of PDCCH or the CSI-RS port(s) of a CSI-RS resource. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values: | |
| - 'typeA': {Doppler shift, Doppler spread, average delay, delay spread} | |
| - 'typeB': {Doppler shift, Doppler spread} | |
| - 'typeC': {Doppler shift, average delay} | |
| - 'typeD': {Spatial Rx parameter} | |
| The UE can be configured with a list of up to 128 *TCI-State* configurations, within the higher layer parameter *dl-OrJointTCI-StateList* in *PDSCH-Config* for providing a reference signal for the quasi co-location for DM-RS of PDSCH and DM-RS of PDCCH in a BWP/CC, for CSI-RS, and to provide a reference, if applicable, for determining UL TX spatial filter for dynamic-grant and configured-grant based PUSCH and PUCCH resource in a BWP/CC, and SRS. | |
| If the *TCI-State* or *TCI-UL-State* configurations are absent in a BWP of the CC, the UE can apply the *TCI-State* or *TCI-UL-State* configurations from a reference BWP of a reference CC configured by *unifiedTCI-StateRef.* The UE is not expected to be configured with *tci-StatesToAddModList, SpatialRelationInfo* or *PUCCH-SpatialRelationInfo,* except *SpatialRelationInfoPos* in a CC in a band, if the UE is configured with *dl-OrJointTCI-StateList* or *ul-TCI-StateList* in any CC in the same band. The UE can assume that when the UE is configured with *tci-StatesToAddModList* in any CC in the CC list configured by *simultaneousTCI-UpdateList1-r16, simultaneousTCI-UpdateList2-r16, simultaneousSpatial-UpdatedList1-r16, or simultaneousSpatial-UpdatedList2-r16,* the UE is not configured with *dl-OrJointTCl-StateList* or *ul-TCI-StateList* in any CC within the same band in the CC list. | |
| The UE receives an activation command, as described in clause 6.1.3.xx of [10, TS 38.321], 6.1.3.47 of [10, TS 38.321] or 6.1.4.xx of [10, TS 38.321], used to map up to 8 TCI states and/or pairs of TCI states, with one TCI state for DL channels/signals and/or one TCI state for UL channels/signals to the codepoints of the DCI field *'Transmission Configuration Indication'* for one or for a set of CCs/DL BWPs, [and/] or up to 8 sets of TCI states, where each set is comprised of up to two TCI state(s) for DL and UL signals/channels, or up to two TCI state(s) for DL channels/signals and up to two TCI state(s) for UL channels/signals to the codepoints of the DCI field *'Transmission Configuration Indication'* for one or for a set of CCs/DL BWPs, and if applicable, for one or for a set of CCs/UL BWPs. When a set of TCI state IDs are activated for a set of CCs/DL BWPs and if applicable, for a set of CCs/UL BWPs, where the applicable list of CCs is determined by the indicated CC in the activation command, the same set of TCI state IDs are applied for all DL and/or UL BWPs in the indicated CCs. If the activation command maps *TCl-State(s)* and/or *TCI-UL-State(s)* to only one TCI codepoint, the UE shall apply the indicated *TCI-State(s)* and/or *TCI-UL-State(s)* to one or to a set of CCs /DL BWPs, and if applicable, to one or to a set of CCs /UL BWPs once the indicated mapping for the one single TCI codepoint is applied as described in [11, TS 38.133]. | |
| When the *bwp-id* or *cell* for QCL-TypeA/D source RS in a QCL-Info of the TCI state is not configured, the UE assumes that QCL-TypeA/D source RS is configured in the CC/DL BWP where TCI state applies. | |
| When *tci-PresentInDCl* is set as 'enabled' or *tci-PresentDCI-1-2* is configured for the CORESET, a UE configured with *dl-OrJointTCl-StateList* with activated *TCI-State* or *ul-TCI-StateList* with activated *TCI-UL-State* receives DCI format 1_1/1_2/1_3 providing indicated *TCI-State(s)* and/or *TCI-UL-State(s)* for a CC or all CCs in the same CC list configured by *simultaneousU-TCI-UpdateList1-r17, simultaneousU-TCI-UpdateList2-r17, simultaneousU-TCI-UpdateList3-r17, simultaneousU-TCI-UpdateList4-r17.* The DCI format 1_1/1_2 can be with or without, if applicable, DL assignment. If the DCI format 1_1/1_2/ is without DL assignment, the UE can assume the following: | |
| - CS-RNTI is used to scramble the CRC for the DCI | |
| - The values of the following DCI fields are set as follows: | |
| - RV = all '1's | |
| - MCS = all '1's | |
| - NDI = 0 | |
| - Set to all '0's for FDRA Type 0, or all '1's for FDRA Type 1, or all '0's for dynamicSwitch (same as in Table 10.2-4 of [6, TS 38.213]). | |
| After a UE receives an initial higher layer configuration of *dl-OrJointTCI-StateList* with more than one *TCI-State* and before application of an indicated TCI state from the configured TCI states: | |
| - The UE assumes that DM-RS of PDSCH and DM-RS of PDCCH and the CSI-RS | |
| applying the indicated TCI state are quasi co-located with the SS/PBCH block the UE identified during the initial access procedure After a UE receives an initial higher layer configuration of *dl-OrJointTCI-StateList* with more than one *TCI-State* or *ul-TCI-StateList* with more than one *TCI-UL-State* and before application of an indicated TCI state from the configured TCI states: | |
| - The UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant or a MsgA PUSCH transmission during the initial access procedure After a UE receives a higher layer configuration of *dl-OrJointTCI-StateList* with more than one *TCI-State* as part of a Reconfiguration with sync procedure as described in [12, TS 38.331] and before applying an indicated TCI state from the configured TCI states: | |
| - The UE assumes that DM-RS of PDSCH and DM-RS of PDCCH, and the CSI-RS applying the indicated TCI state are quasi co-located with the SS/PBCH block or the CSI-RS resource the UE identified during the random access procedure initiated by the Reconfiguration with sync procedure as described in [12, TS 38.331]. After a UE receives a higher layer configuration of *dl-OrJointTCI-StateList* with more than one *TCI-State* or more than one *TCI-UL-State* as part of a Reconfiguration with sync procedure as described in [12, TS 38.331] and before applying an indicated TCI state from the configured TCI states: | |
| - The UE assumes that the UL TX spatial filter, if applicable, for dynamic-grant and configured-grant based PUSCH and PUCCH, and for SRS applying the indicated TCI state, is the same as that for a PUSCH transmission scheduled by a RAR UL grant or a MsgA PUSCH transmission during random access procedure initiated by the Reconfiguration with sync procedure as described in [12, TS 38.331]. | |
| If a UE receives a higher layer configuration of *dl-OrJointTCI-StateList* with a single *TCI-State,* that can be used as an indicated TCI state, the UE obtains the QCL assumptions from the configured TCI state for DM-RS of PDSCH and DM-RS of PDCCH, and the CSI -RS applying the indicated TCI state. | |
| If a UE receives a higher layer configuration of *dl-OrJointTCI-StateList* with a single *TCI-State or ul-TCI-StateList* with *a single TCI-UL-State,* that can be used as an indicated TCI state, the UE determines an UL TX spatial filter, if applicable, from the configured TCI state for dynamic-grant and configured-grant based PUSCH and PUCCH, and SRS applying the indicated TCI state. | |
| When a UE configured with *dl-OrJointTCI-StateList* would transmit a PUCCH with positive HARQ-ACK or a PUSCH with positive HARQ-ACK corresponding to the DCI carrying the TCI State indication and without DL assignment, or corresponding to the PDSCH scheduled by the DCI carrying the TCI State indication, and if the indicated TCI State(s) is/are different from the previously indicated one(s), the indicated *TCI-State(s)* and/or *TCI-UL-State(s)* should be applied starting from the first slot that is at least *beamAppTime* symbols after the last symbol of the PUCCH or the PUSCH, and if the UE receives more than one indicated TCI state for a CC/BWP to be applied starting from the first slot that is at least *beamAppTime* symbols after the last symbol of the PUCCH or the PUSCH, the indicated TCI state carried in the latest DCI in time corresponding to positive HARQ-ACK value is applied. The first slot and the *beamAppTime* symbols are both determined on the active BWP with the smallest SCS among the BWP(s) from the CCs applying the indicated *TCI-State(s)* or *TCI-UL-State(s)* that are active at the end of the PUCCH or the PUSCH carrying the positive HARQ-ACK. | |
| If a UE is configured with *pdsch-TimeDomainAllocationListForMultiPDSCH* in which one or more rows contain multiple *SLIVs* for PDSCH on a DL BWP of a serving cell, and the UE is receiving a DCI carrying the *TCI-State* indication and without DL assignment, the UE does not expect that the number of indicated *SLIVs* in the row of the *pdsch-TimeDomainAllocationListForMultiPDSCH* by the DCI is more than one. | |
| If the UE is configured with *SSB-MTC-AddtionalPCI* and with *PDCCH-Config* that contains two different values of *coresetPoolIndex* in *ControlResourceSet,* the UE receives an activation command for CORESET associated with each *coresetPoolIndex,* as described in clause 6.1.3.14 of [10, TS 38.321] or 6.1.3.xx of [10, TS 38.321], used to map up to 8 TCI states and/or pairs of TCI states, with one TCI state for DL channels/signals and/or one TCI state for UL channels/signals to the codepoints of the DCI field *'Transmission Configuration Indication'* in one CC/DL BWP. When a set of TCI state IDs are activated for a *coresetPoolIndex,* the activated TCI states corresponding to one *coresetPoolIndex* is associated with the serving cell physical cell ID and activated TCI states corresponding to another *coresetPoolIndex* can be associated with another physical cell ID. | |
| When a UE supports two TCI states in a codepoint of the DCI field *'Transmission Configuration Indication'* the UE may receive an activation command, as described in clause 6.1.3.24 of [10, TS 38.321], the activation command is used to map up to 8 combinations of one or two TCI states to the codepoints of the DCI field *'Transmission Configuration Indication'.* The UE is not expected to receive more than 8 TCI states in the | |
| activation command. | |
| When the DCI field *'Transmission Configuration Indication'* is present in DCI format 1_2 and when the number of codepoints S in the DCI field *'Transmission Configuration Indication'* of DCI format 1_2 is smaller than the number of TCI codepoints that are activated by the activation command, as described in clause 6.1.3.14, 6.1.3.24 and 6.1.3.47 of [10, TS38.321], only the first S activated codepoints are applied for DCI format 1_2. | |
| When the UE would transmit a PUCCH with HARQ-ACK information in slot *n* corresponding to the PDSCH carrying the activation command, the indicated mapping between TCI states and codepoints of the DCI field *'Transmission Configuration Indication'* should be applied starting from the first slot that is after slot $n +$ $3 {N}_{slot}^{subframe , μ} + \frac{{2}^{μ}}{{2}^{{μ}_{{K}_{mac}}}} ⋅ {k}_{mac}$ where *m* is the SCS configuration for the PUCCH and *µ*_{*K*_{mac}} is the subcarrier spacing configuration for *k*_{mac} with a value of 0 for frequency range 1, and *k*_{mac} is provided by *K-Mac* or *k*_{mac} = 0 if *K-Mac* is not provided. If *tci-PresentInDCI* is set to 'enabled' or *tci-PresentDCI-1-2* is configured for the CORESET scheduling the PDSCH, and the time offset between the reception of the DL DCI and the corresponding PDSCH is equal to or greater than *timeDurationForQCL* if applicable, after a UE receives an initial higher layer configuration of TCI states and before reception of the activation command, the UE may assume that the DM-RS ports of PDSCH of a serving cell are quasi co-located with the SS/PBCH block determined in the initial access procedure with respect to *qcl-Type* set to 'typeA', and when applicable, also with respect to *qcl-Type* set to 'typeD'. | |
| If a UE is configured with the higher layer parameter *tci-PresentInDCI* that is set as 'enabled' for the CORESET scheduling a PDSCH, the UE assumes that the TCI field is present in the DCI format 1_1 or format 1_3 of the PDCCH transmitted on the CORESET. If a UE is configured with the higher layer parameter *tci-PresentDCI-*1-2 for the CORESET scheduling the PDSCH, the UE assumes that the TCI field with a DCI field size indicated by *tci-PresentDCI-1-2* is present in the DCI format 1_2 of the PDCCH transmitted on the CORESET. If a UE is configured with the higher layer parameter *tci-PresentInDCl* that is set as 'enabled' for the CORESET scheduling the multicast PDSCH, the UE assumes that the TCI field is present in the DCI format 4_2 of the PDCCH transmitted on the CORESET. If the PDSCH is scheduled by a DCI format not having the TCI field present, and the time offset between the reception of the DL DCI and the corresponding PDSCH of a serving cell is equal to or greater than a threshold *timeDurationForQCL* if applicable, where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission within the active BWP of the serving cell. | |
| When a UE is configured with both *sfnSchemePDCCH* and *sfnSchemePDSCH* scheduled by DCI format 1_0 or by DCI format 1_1/1_2, if the time offset between the reception of the DL DCI and the corresponding PDSCH of a serving cell is equal to or greater than a threshold *timeDurationForQCL* if applicable: | |
| - if the UE supports *sfn-DefaultDL-BeamSetup-r17* for DCI scheduling without TCI field, the UE assumes that the TCI state(s) or the QCL assumption(s) for the PDSCH is identical to the TCI state(s) or QCL assumption(s) whichever is applied for the CORESET used for the reception of the DL DCI within the active BWP of the serving cell regardless of the number of active TCI states of the CORESET. If the UE does not support *sfn-SchemeA-DynamicSwitching-r17* or *sfn-SchemeB-DynamicSwitching-r17,* the UE should be activated with the CORESET with two TCI states. | |
| - else if the UE does not support *sfn-DefaultDL-BeamSetup-r17* for DCI scheduling without TCI field, the UE shall expect TCI field present when scheduled by DCI format 1_1/1_2. | |
| When a UE is configured with *sfnSchemePDSCH* and *sfnSchemePDCCH* is not configured, when scheduled by DCI format 1_1/1_2, if the time offset between the reception of the DL DCI and the corresponding PDSCH of a serving cell is equal to or greater than a threshold *timeDurationForQCL* if applicable, the UE shall expect TCI field present. | |
| For PDSCH scheduled by DCI format 1_0, 1_1, 1_2, when a UE is configured with *sfnSchemePDCCH* set to 'sfnSchemeA' and *sfnSchemePDSCH* is not configured, and there is no TCI codepoint with two TCI states in the activation command, and if the time offset between the reception of the DL DCI and the corresponding PDSCH is equal or larger than the threshold *timeDurationForQCL* if applicable and the CORESET which schedules the PDSCH is indicated with two TCI states, the UE assumes that the TCI state or the QCL assumption for the PDSCH is identical to the first TCI state or QCL assumption which is applied for the CORESET used for the PDCCH transmission within the active BWP of the serving cell. | |
| If a PDSCH is scheduled by a DCI format having the TCI field present, the TCI field in DCI in the scheduling component carrier points to the activated TCI states in the scheduled component carrier or DL BWP, the UE shall use the *TCI-State* according to the value of the *'Transmission Configuration Indication'* field in the detected PDCCH with DCI for determining PDSCH antenna port quasi co-location. The UE may assume that the DM- | |
| RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold *timeDurationForQCL,* where the threshold is based on reported UE capability [13, TS 38.306]. For a single slot PDSCH, the indicated TCI state(s) should be based on the activated TCI states in the slot with the scheduled PDSCH. For a multi-slot PDSCH or the UE is configured with higher layer parameter *pdsch-TimeDomainAllocationListForMultiPDSCH,* the indicated TCI state(s) should be based on the activated TCI states in the first slot with the scheduled PDSCH(s), and UE shall expect the activated TCI states are the same across the slots with the scheduled PDSCH(s). When the UE is configured with CORESET associated with a search space set for cross-carrier scheduling and the UE is not configured with *enableDefaultBeamForCCS,* the UE expects *tci-PresentInDCl* is set as 'enabled' or *tci-PresentDCI-1-2* is configured for the CORESET, and if one or more of the TCI states configured for the serving cell scheduled by the search space set contains *qcl-Type* set to 'typeD', the UE expects the time offset between the reception of the detected PDCCH in the search space set and a corresponding PDSCH is larger than or equal to the threshold *timeDurationForQCL.* | |
| Independent of the configuration of *tci-PresentInDCI* and *tci-PresentDCI-1-2* in RRC connected mode, if the UE is not provided *dl-OrJointTCI-StateList-r17,* and if the offset between the reception of the DL DCI and the corresponding PDSCH is less than the threshold *timeDurationForQCL* and at least one configured TCI state for the serving cell of scheduled PDSCH contains *qcl-Type* set to 'typeD', | |
| - the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers). | |
| - If a UE is configured with *enableDefaultTCI-StatePerCoresetPoolIndex* and the UE is configured by higher layer parameter *PDCCH-Config* that contains two different values of *coresetPoolIndex* in different *ControlResourceSets,* | |
| - the UE may assume that the DM-RS ports of PDSCH associated with a value of *coresetPoolIndex* of a serving cell are quasi co-located with the RS(s) with respect to the QCL parameter(s) used for PDCCH quasi co-location indication of the CORESET associated with a monitored search space with the lowest *controlResourceSetId* among CORESETs, which are configured with the same value of *coresetPoolIndex* as the PDCCH scheduling that PDSCH, in the latest slot in which one or more CORESETs associated with the same value of *coresetPoolIndex* as the PDCCH scheduling that PDSCH within the active BWP of the serving cell are monitored by the UE. In this case, if the 'QCL-TypeD' of the PDSCH DM-RS is different from that of the PDCCH DM-RS with which they overlap in at least one symbol and they are associated with same value of *coresetPoolIndex,* the UE is expected to prioritize the reception of PDCCH associated with that CORESET. This also applies to the intra-band CA case (when PDSCH and the CORESET are in different component carriers). | |
| - If a UE is configured with *enableTwoDefaultTCI-States,* and at least one TCI codepoint indicates two TCI states, the UE may assume that the DM-RS ports of PDSCH or PDSCH transmission occasions of a serving cell are quasi co-located with the RS(s) with respect to the QCL parameter(s) associated with the TCI states corresponding to the lowest codepoint among the TCI codepoints containing two different TCI states. When the UE is configured by higher layer parameter *repetitionScheme* set to 'tdmSchemeA' or is configured with higher layer parameter *repetitionNumber,* and the offset between the reception of the DL DCI and the first PDSCH transmission occasion is less than the threshold *timeDurationForQCL,* the mapping of the TCI states to PDSCH transmission occasions is determined according to clause 5.1.2.1 by replacing the indicated TCI states with the TCI states corresponding to the lowest codepoint among the TCI codepoints containing two different TCI states based on the activated TCI states in the slot with the first PDSCH | |
| transmission occasion. In this case, if the 'QCL-TypeD' in both of the TCI states corresponding to the lowest codepoint among the TCI codepoints containing two different TCI states is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers) | |
| - If a UE is not configured with *sfnSchemePDSCH,* and the UE is configured with *sfnSchemePDCCH* set to 'sfnSchemeA' and there is no TCI codepoint with two TCI states in the activation command and the CORESET with the lowest ID in the latest slot is indicated with two TCI states, the UE may assume that the DM-RS ports of PDSCH of a serving cell are quasi co-located with the RS(s) with respect to the QCL parameter(s) associated with the first TCI state of two TCI states indicated for the CORESET. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET with single active TCI state. This also applies to the intra-band CA case (when PDSCH and the CORESET are in different component carriers). | |
| - In all cases above, if none of configured TCI states for the serving cell of scheduled PDSCH is configured with *qcl-Type* set to 'typeD', the UE shall obtain the other QCL assumptions from the indicated TCI state(s) for its scheduled PDSCH irrespective of the time offset between the reception of the DL DCI and the corresponding PDSCH. | |
| Independent of the configuration of *tci-PresentInDCI* and *tci-PresentDCI-1-2* in RRC connected mode, if the UE is provided *dl-OrJointTCI-StateList-r17,* and if the offset between the reception of the DL DCI and the corresponding PDSCH is less than the threshold *timeDurationForQCL* and at least one configured TCI state for the serving cell of scheduled PDSCH contains *qcl-Type* set to 'typeD', regardless of configuration of *followUnifiedTCI-State,* | |
| - if the indicated TCI state is associated with the PCI of the serving cell, the indicated TCI state is applied to PDSCH reception. | |
| - if the indicated TCI state is associated with a PCI different from the serving cell, the UE may assume that the DM-RS ports of PDSCH(s) of a serving cell are quasi co-located with the RS(s) with respect to the QCL parameter(s) used for PDCCH quasi co-location indication of the CORESET associated with a monitored search space with the lowest *controlResourceSetId* in the latest slot in which one or more CORESETs within the active BWP of the serving cell are monitored by the UE. In the CA case, if the 'QCL-TypeD' of the PDSCH DM-RSs from respective CCs in a band are different in a slot, the QCL-TypeD assumption of the PDSCH DM-RS in the CC with lowest CC ID in the band is applied to all the PDSCH DM-RSs in the CCs in the band. In this case, if the *qcl-Type* is set to 'typeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers). | |
| If the PDCCH carrying the scheduling DCI is received on one component carrier, and a PDSCH scheduled by that DCI is on another component carrier: | |
| - The *timeDurationForQCL* is determined based on the subcarrier spacing of the scheduled PDSCH. If µ_{PDCCH} < µ_{PDSCH} an additional timing delay $d \frac{{2}^{{μ}_{PDSCH}}}{{2}^{{μ}_{PDCCH}}}$ is added to the *timeDurationForQCL,* where *d* is defined in 5.2.1.5.1a-1, otherwise *d* is zero; | |
| - When the UE is configured with *enableDefaultBeamForCCS,* if the offset between the reception of the DL DCI and the corresponding PDSCH is less than the threshold *timeDurationForQCL,* or if the DL DCI does not have the TCI field present, the UE obtains its QCL assumption for the scheduled PDSCH from the activated TCI state with the lowest ID applicable to PDSCH in the active BWP of the scheduled cell. | |
| A UE that has indicated a capability *beamCorrespondenceWithoutUL-BeamSweeping* set to 'supported', as described in [13, TS 38.306], can determine a spatial domain filter to be used while performing the applicable | |
| channel access procedures described in [16, TS 37.213] prior to a UL transmission on the channel as follows: | |
| - if UE is indicated with an SRI corresponding to the UL transmission, the UE may use a spatial domain filter that is same as the spatial domain transmission filter associated with the indicated SRI, | |
| - if UE is configured with *SRS-spatialRelationInfo* for the UL transmission, the UE may use a spatial domain filter that is same as the spatial domain filter associated with *referenceSignal* in the corresponding *SRS-spatialRelationInfo,* | |
| - if UE is configured with *TCI-State* in *dl-OrJointTCl-StateList* or *TCI-UL-State* in *ul-TCI-StateList,* the UE may use a spatial domain filter that is same as the spatial domain receive filter the UE may use to receive the DL reference signal associated with the indicated TCI state. | |
| When the PDCCH reception includes two PDCCH from two respective search space sets, as described in clause 10.1 of [6, TS 38.213], for the purpose of determining the time offset between the reception of the DL DCI and the corresponding PDSCH, the PDCCH candidate that ends later in time is used. When the PDCCH reception includes two PDCCH candidates from two respective search space sets, as described in clause 10.1 of [6, TS 38.213], for the configuration of *tci-PresentInDCl* or *tci-PresentDCI-1-2,* the UE expects the same configuration in the first and second CORESETs associated with the two PDCCH candidates; and if the PDSCH is scheduled by a DCI format not having the TCI field present and if the scheduling offset is equal to or larger than *timeDurationForQCL,* if applicable, PDSCH QCL assumption is based on the CORESET with lower ID among the first and second CORESETs associated with the two PDCCH candidates. | |
| For a periodic CSI-RS resource in an *NZP-CSI-RS-ResourceSet* configured with higher layer parameter *trs-Info,* the UE shall expect that a TCI-State indicates one of the following quasi co-location type(s): | |
| - 'typeC' with an SS/PBCH block and, when applicable, 'typeD' with the same SS/PBCH block where SS/PBCH block may have a PCI different from the PCI of the serving cell. The UE can assume center frequency, SCS, SFN offset are the same for SS/PBCH block from the serving cell and SS/PBCH block having a PCI different from the serving cell, or | |
| - 'typeC' with an SS/PBCH block and, when applicable,'typeD' with a CSI-RS resource in an *NZP-CSI-RS-ResourceSet* configured with higher layer parameter *repetition,* where SS/PBCH block may have a PCI different from the PCI of the serving cell. The UE can assume center frequency, SCS, SFN offset are the same for SS/PBCH block from the serving cell and SS/PBCH block having a PCI different from the serving cell. | |
| For periodic/semi-persistent CSI-RS, if the UE is configured with *dl-OrJointTCI-StateList,* the UE can assume that the indicated *TCI-State* is not applied. | |
| For an aperiodic CSI-RS resource in an *NZP-CSI-RS-ResourceSet* configured with higher layer parameter *trs-Info,* the UE shall expect that a *TCI-State* indicates *qcl-Type* set to 'typeA' with a periodic CSI-RS resource in a *NZP-CSI-RS-ResourceSet* configured with higher layer parameter *trs-Info* and, when applicable, *qcl-Type* set to 'typeD' with the same periodic CSI-RS resource. | |
| For a CSI-RS resource in an *NZP-CSI-RS-ResourceSet* configured without higher layer parameter *trs-Info* and without the higher layer parameter *repetition,* the UE shall expect that a TCI-State indicates one of the following quasi co-location type(s): | |
| - 'typeA' with a CSI-RS resource in a *NZP-CSI-RS-ResourceSet* configured with higher layer parameter *trs-Info* and, when applicable, 'typeD' with the same CSI-RS resource, or | |
| - 'typeA' with a CSI-RS resource in a *NZP-CSI-RS-ResourceSet* configured with higher layer parameter *trs-Info* and, when applicable, 'typeD' with an SS/PBCH block, where SS/PBCH block may have a PCI different from the PCI of the serving cell. The UE can assume center frequency, SCS, SFN offset are the same for SS/PBCH block from the serving cell and SS/PBCH block having a PCI different from the serving cell, or | |
| - 'typeA' with a CSI-RS resource in a *NZP-CSI-RS-ResourceSet* configured with higher layer parameter *trs-Info* and, when applicable, 'typeD' with a CSI-RS resource in a *NZP-CSI-RS-ResourceSet* configured with higher layer parameter *repetition,* or | |
| - 'typeB' with a CSI-RS resource in a *NZP-CSI-RS-ResourceSet* configured with higher layer parameter *trs-Info* when 'typeD' is not applicable. | |
| For a CSI-RS resource in an *NZP-CSI-RS-ResourceSet* configured with higher layer parameter *repetition,* the UE shall expect that a TCI-State indicates one of the following quasi co-location type(s): | |
| - 'typeA' with a CSI-RS resource in a *NZP-CSI-RS-ResourceSet* configured with higher layer parameter *trs-Info* and, when applicable, 'typeD' with the same CSI-RS resource, or | |
| - 'typeA' with a CSI-RS resource in a *NZP-CSI-RS-ResourceSet* configured with higher layer parameter *trs-Info* and, when applicable, 'typeD' with a CSI-RS resource in a *NZP-CSI-RS-ResourceSet* configured with higher layer parameter *repetition,* or | |
| - 'typeC' with an SS/PBCH block and, when applicable, 'typeD' with the same SS/PBCH block, the reference RS may additionally be an SS/PBCH block having a PCI different from the PCI of the serving cell. The UE can assume center frequency, SCS, SFN offset are the same for SS/PBCH block from the serving cell and SS/PBCH block having a PCI different from the serving cell. | |
| For the DM-RS of PDCCH, if the UE is not configured with *dl-OrJointTCI-StateList,* the UE shall expect that *a TCI-State* indicates one of the following quasi co-location type(s): | |
| - 'typeA' with a CSI-RS resource in a *NZP-CSI-RS-ResourceSet* configured with higher layer parameter *trs-Info* and, when applicable, 'typeD' with the same CSI-RS resource, or | |
| - 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition,* or | |
| - 'typeA' with a CSI-RS resource in a *NZP-CSI-RS-ResourceSet* configured without higher layer parameter trs-Info and without higher layer parameter *repetition* and, when applicable, 'typeD' with the same CSI-RS resource. | |
| When a UE is configured with *sfnSchemePdcch* set to 'sfnSchemeA', and CORESET is activated with two TCI states, the UE shall assume that the DM-RS port(s)of the PDCCH in the CORESET is quasi co-located with the DL-RSs of the two TCI states. When a UE is configured with *sfnSchemePdcch* set to 'sfnSchemeB', and a CORESET is activated with two TCI states, the UE shall assume that the DM-RS port(s)of the PDCCH is quasi co-located with the DL-RSs of the two TCI states except for quasi co-location parameters {Doppler shift, Doppler spread} of the second indicated TCI state. | |
| When a UE is configured by higher layer parameter *cjtSchemePDSCH* and *dl-OrJointTCl-StateList* and is indicated with two TCI-States applied for PDSCH reception and reports [support for two joint TCI states for PDSCH-CJT]: | |
| - if the UE is configured with *cjtSchemeA,* the UE assumes that PDSCH DM-RS port(s) are QCLed with the DL RSs of both indicated TCI-States with respect to QCL-TypeA. | |
| - if the UE is configured with *cjtSchemeB,* the UE assumes that PDSCH DM-RS port(s) are QCLed with the DL RSs of both indicated TCI-States with respect to QCL-TypeA except for QCL parameters {Doppler shift, Doppler spread} of the second indicated joint TCI state. | |
| For the DM-RS of PDSCH, if the UE is not configured with *dl-OrJointTCI-StateList,* the UE shall expect that a *TCI-State* indicates one of the following quasi co-location type(s): | |
| - 'typeA' with a CSI-RS resource in a *NZP-CSI-RS-ResourceSet* configured with higher layer parameter *trs-Info* and, when applicable, 'typeD' with the same CSI-RS resource, or | |
| - 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition*,or | |
| - typeA' with a CSI-RS resource in a *NZP-CSI-RS-ResourceSet* configured without higher layer parameter *trs-Info* and without higher layer parameter *repetition* and, when applicable, 'typeD' with the same CSI-RS resource. | |
| For the DM-RS of PDCCH, if the UE is configured with *dl-OrJointTCI-StateList,* the UE shall expect that an indicated *TCI-State* indicates one of the following quasi co-location type(s): | |
| - 'typeA' with a CSI-RS resource in a *NZP-CSI-RS-ResourceSet* configured with higher layer parameter *trs-Info* and, when applicable, 'typeD' with the same CSI-RS resource, or | |
| - 'typeA' with a CSI-RS resource in a *NZP-CSI-RS-ResourceSet* configured with | |
| higher layer parameter *trs-Info* and, when applicable, 'typeD' with a CSI-RS resource in an *NZP-CSI-RS-ResourceSet* configured with higher layer parameter *repetition.* | |
| For the DM-RS of PDSCH, if the UE is configured with *dl-OrJointTCI-StateList,* the UE shall expect that an indicated *TCI-State* indicates one of the following quasi co-location type(s): | |
| - 'typeA' with a CSI-RS resource in a *NZP-CSI-RS-ResourceSet* configured with higher layer parameter *trs-Info* and, when applicable, 'typeD' with the same CSI-RS resource, or | |
| - 'typeA' with a CSI-RS resource in a *NZP-CSI-RS-ResourceSet* configured with higher layer parameter *trs-Info* and, when applicable, 'typeD' with a CSI-RS resource in an *NZP-CSI-RS-ResourceSet* configured with higher layer parameter *repetition.* | |
| When a UE is configured with *sfnSchemePDSCH* set to 'sfnSchemeA', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states. When a UE is configured with *sfnSchemePDSCH* set to 'sfnSchemeB', and the UE is indicated with two TCI states in a codepoint of the DCI field 'Transmission Configuration Indication' in a DCI scheduling a PDSCH, the UE shall assume that the DM-RS port(s)of the PDSCH is quasi co-located with the DL-RSs of the two TCI states except for quasi co-location parameters { Doppler shift, Doppler spread} of the second indicated TCI state. | |
| When a UE is configured with *dl-OrJointTCI-StateList* or *TCI-UL-State* and is configured by higher layer parameter *PDCCH-Config* that contains two different values of coresetPoolIndex in *ControlResourceSet,* an indicated TCI state is specific to a coresetPoolIndex value, when it is indicated by the DCI field 'Transmission Configuration Indication' in DCI format 1_1/1_2 associated with the coresetPoolIndex value. | |
| When a UE is configured with *dl-OrJointTCl-StateList* and is having two indicated TCI-states, if the UE does not report its capability of *[two default beams for S-DCI based MTRP]* in frequency range 2 and when the offset between the reception of the scheduling/activation DCI format 1_0/1_1/1_2 and the scheduled or activated PDSCH reception is less than *[timeDurationForQCL]* in frequency range 2, the UE shall apply the first indicated TCI-State to the scheduled or activated PDSCH reception. | |
| When a UE is configured with *dl-OrJointTCI-StateList,* is configured by higher layer parameter *PDCCH-Config* that contains two different values of *coresetPoolIndex* in *ControlResourceSet,* if the UE does not report its capability of [default beam per *coresetPoolIndex* for M-DCI based MTRP] in frequency range 2 | |
| - when the offset between the reception of the scheduling/activation DCI format 1_0/1_1/1_2 in a CORESET associated with *coresetPoolIndex* value 0 and the scheduled or activated PDSCH reception is less than *[timeDurationForQCL]* in frequency range 2, the UE shall apply the indicated joint/DL TCI state specific to *coresetPoolIndex* value 0 to the scheduled or activated PDSCH reception. | |
| - the UE does not expect that the offset between reception of the scheduling/activation DCI format 1_0/1_1/1_2 in a CORESET associated with *coresetPoolIndex* value 1 and scheduled or activated PDSCH reception is less than [timeDurationForQCL] in frequency range 2. | |
| When a UE is configured with *dl-OrJointTCl-StateList* and is having two indicated TCI-states: | |
| - Regardless of the offset between the reception of the scheduling DCI format 1_0/1_1/1_2 and the scheduled/activated PDSCH reception, if the UE is in frequency range 1, or the UE reports its capability of *[two default beams for S-DCI based MTRP]* in frequency range 2, or | |
| - If the UE does not report its capability of *[two default beams for S-DCI based MTRP]*in frequency range 2 and if the scheduling offset between the reception of the scheduling DCI format 1_0/1_1/1_2 and the scheduled/activated PDSCH reception is equal to or larger than *[timeDurationForQCL]* | |
| - The UE can be configured by higher layer parameter *applyIndicatedTCIState* to indicate whether the first, the second, or both of the indicated TCI-state(s) is/are applied to PDSCH reception scheduled or activated by DCI format 1_0. The UE can be configured with *applyIndicatedTCIState* with value *both* only when the UE is configured with *cjtSchemePDSCH* and the UE reports *[support for two joint TCI states for PDSCH-CJT*] or the UE is configured with *sfnSchemePdsch.* In that case, the UE shall apply both indicated TCI-states to PDSCH reception scheduled or activated by DCI format 1_0 on a search space | |
| other than Type0/0A/2 CSS on CORESET#0. | |
| - If the UE is not configured with *applyIndicatedTCIState,* the first indicated TCI-state is applied to PDSCH reception scheduled or activated by DCI format 1_0. | |
| - When the UE is configured with *tciSelection-PresentInDCI* jointly for both DCI formats 1_1 and 1_2 in the same DL BWP, and when the UE receives a DCI format 1_1/1_2 that schedules or activates PDSCH reception, the UE shall determine the indicated joint/DL TCI state(s) for the PDSCH reception according to the following: | |
| - If the DCI format 1_1/1_2 indicates codepoint "00" for the [TCI selection field], the UE shall apply the first one of two indicated joint/DL TCI states to all PDSCH DM-RS port(s) of corresponding PDSCH transmission occasion(s) scheduled or activated by the DCI format 1_1/1_2. | |
| - If the DCI format 1_1/1_2 indicates codepoint "01" for the [TCI selection field], the UE shall apply the second one of two indicated joint/DL TCI states to all PDSCH DM-RS port(s) of corresponding PDSCH transmission occasion(s) scheduled or activated by the DCI format 1_1/1_2. | |
| - If the DCI format 1_1/1_2 indicates codepoint "10" for the [TCI selection field], the UE shall apply both indicated joint/DL TCI states to the PDSCH reception scheduled or activated by the DCI format 1_1/1_2. | |
| - If the UE is not configured with *tciSelection-PresentInDCI* and when the UE receives a DCI format 1_1/1_2 that schedules/activates PDSCH reception, the UE shall apply both indicated TCI-States to the scheduled or activated PDSCH reception. | |

As described above, the UE can be configured with lists of TCI-State configurations via higher-layer parameters (e.g., PDSCH-Config). The UE can decode PDSCH using the lists of TCI-State configurations. Each TCI-State contains parameters for configuring a QCL relationship between one or two downlink reference signals and the DM-RS ports of the PDSCH, the DM-RS port of PDCCH or the CSI-RS port(s) of a CSI-RS resource. The QCL can be configured by the higher-layer parameter qcl-Type1 for the first DL RS and qcl-Type2 for the second DL RS. The QCL types for each of the two DL RSs can be configured differently regardless of whether the references are to the same DL RS or different DL RSs. The QCL types corresponding to each DL RS can be configured by the higher-layer parameter (e.g., qcl-Type in QCL-Info). The QCL type can have one of the following values.
- typeA: {Doppler shift, Doppler spread, average delay, delay spread}
- typeB: {Doppler shift, Doppler spread}
- typeC: {Doppler shift, average delay}
- typeD: {Spatial Rx parameter}

Here, the Spatial RX parameter may refer to any one of various parameters, such as Angle of Arrival (AoA), Power Angular Spectrum (PAS) of AoA, Angle of Departure (AoD), PAS of AoD, transmit/receive channel correlation, transmit/receive beamforming, and spatial channel correlation.

The base station may transmit configuration information on whether to apply the information in the TCI (transmission configuration indication) field included in DCI (downlink control information) to the terminal through higher-layer signaling.

Additionally, the terminal may receive information on TCI states or pairs of TCI states. For example, the base station may transmit a plurality of TCI states to the terminal via RRC signaling and may configure some of these as TCI states for CORESET. The terminal may receive an activation command. The activation command may be used to map TCI state(s) and/or pairs of TCI states to codepoints of the DCI field 'transmission configuration indication'.

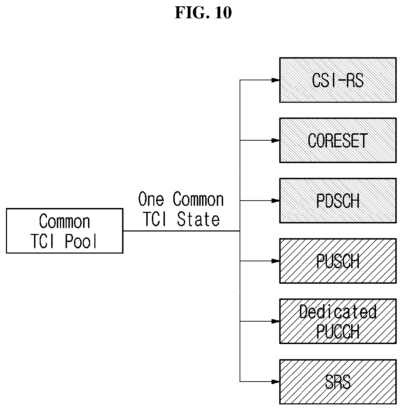

In addition, as shown in FIG. 10 below, the beam may be configured to be unified for a plurality of channels or reference signals through the unified TCI state.

Without the need for the base station to transmit the TCI state to the terminal for each channel, the base station may transmit information on beam setup for CSI-RS, CORESET, PDSCH, PUSCH, PUCCH, SRS, etc., to the terminal through the unified TCI state. Whether the unified TCI state is activated may be transmitted to the terminal explicitly or implicitly. For example, if the CC's BWP does not have a TCI-State or TCI-UL-State configuration, the terminal may apply the TCI-State or TCI-UL-State configuration from the reference BWP of the reference CC configured by the unified TCI-StateRef.

A multiple transmission and reception point (M-TRP) technique, in which communication is performed through multiple transmitting and receiving nodes, may be proposed. The M-TRP technique may be classified into two types: a single downlink control information (S-DCI) technique, which controls transmission and reception through multiple nodes using a single control information, and a multiple downlink control information (M-DCI) technique, which transmits information on each node separately. Furthermore, the procedure for transmitting TCI information may vary depending on whether the TCI information on the uplink and downlink is configured separately or jointly.

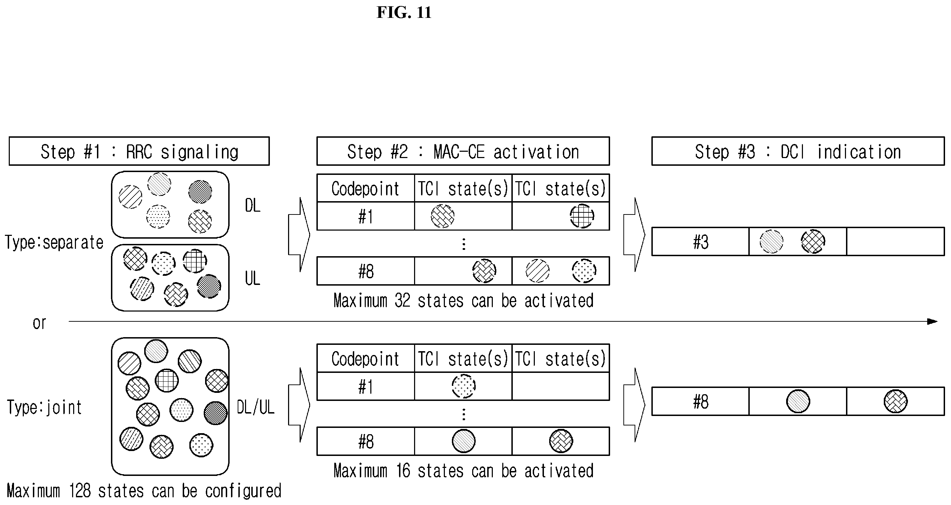

FIG. 11 shows an example of a configuration procedure of each layer to transmit a TCI state in an M-TRP structure according to an embodiment of the present disclosure.

First, as the configuration type related to TCI, there are a separate type and a joint type. The separate type is a method in which the TCI state is configured through separate TCI state lists for the uplink and downlink, respectively, while the joint type is a method in which the TCI state is configured through a joint TCI state list for the uplink and downlink. The base station may transmit the configuration type related to the unified TCI to the terminal via the unifiedTCI-StateType within ServingCellConfig. Additionally, the base station may transmit information on the resource set for reference signals to the terminal via PDSCH-Config, and PDSCH-Config may be included in the BWP-Downlink IE.

Additionally, the terminal may be configured with a list of up to 128 TCI state configurations via higher layer parameters (e.g., dl-OrJointTCI-StateList in PDSCH-Config). The list of TCI configurations may be used to provide criteria for determining ULTX spatial filters for dynamic-grant and configuration-grant-based PUSCH and PUCCH resources and SRS in BWP/CC.

Among the TCI state configurations, the active TCI status configurations may be transmitted via the TCI state activation/deactivation MAC CE. The unified TCI state activation/deactivation MAC CE may be defined as follows.

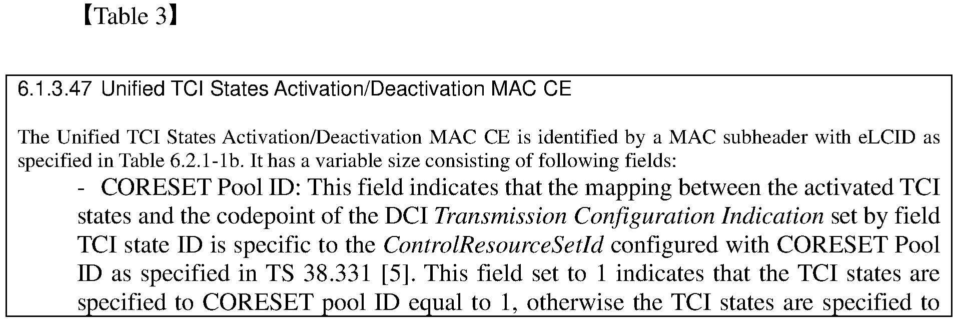

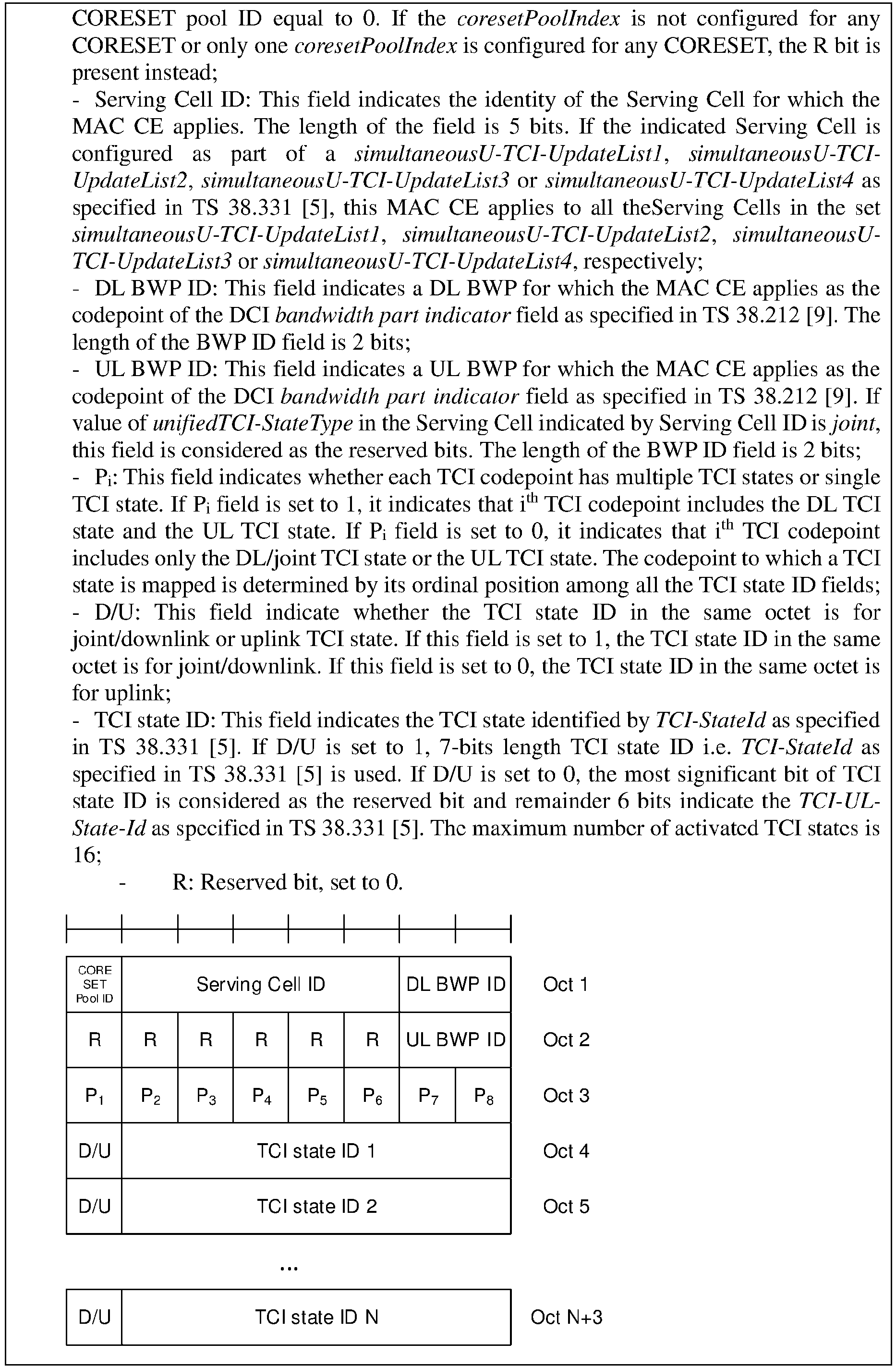

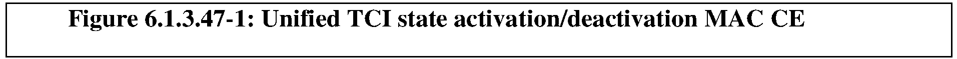

The unified TCI state activation/deactivation MAC CE may indicate the TCI state ID to be activated. The unified TCI state activation/deactivation MAC CE includes serving cell ID, DL BWP ID, and UL BWP ID. It may indicate the serving cell and BWP to which the MAC CE can apply as a code point. A Pi field may indicate whether each i-th codepoint contains multiple TCI states or a single TCI state. If Pi = 1, the i-th TCI codepoint contains multiple TCI states, and if Pi = 0, the i-th TCI code point may contain only a DL/joint TCI state or a UL TCI state.

A D/U field may indicate whether the TCI state corresponding to the TCI state ID existing in the same octet is a DL/joint TCI state or a UL TCI state. Accordingly, in FIG. 11, the D/U field belonging to the same octet as the separate type DL TCI state and the joint type TCI state may be set to 1, and the D/U field belonging to the same octet as the separate type UL TCI state may be set to 0.

The enhanced unified TCI state activation/deactivation MAC CE for joint TCI states may be defined as follows.

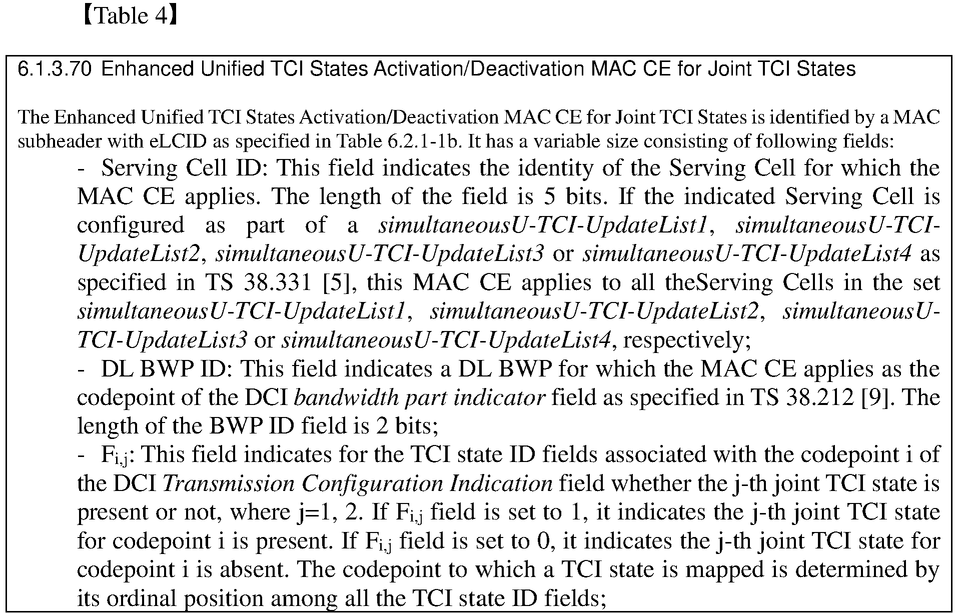

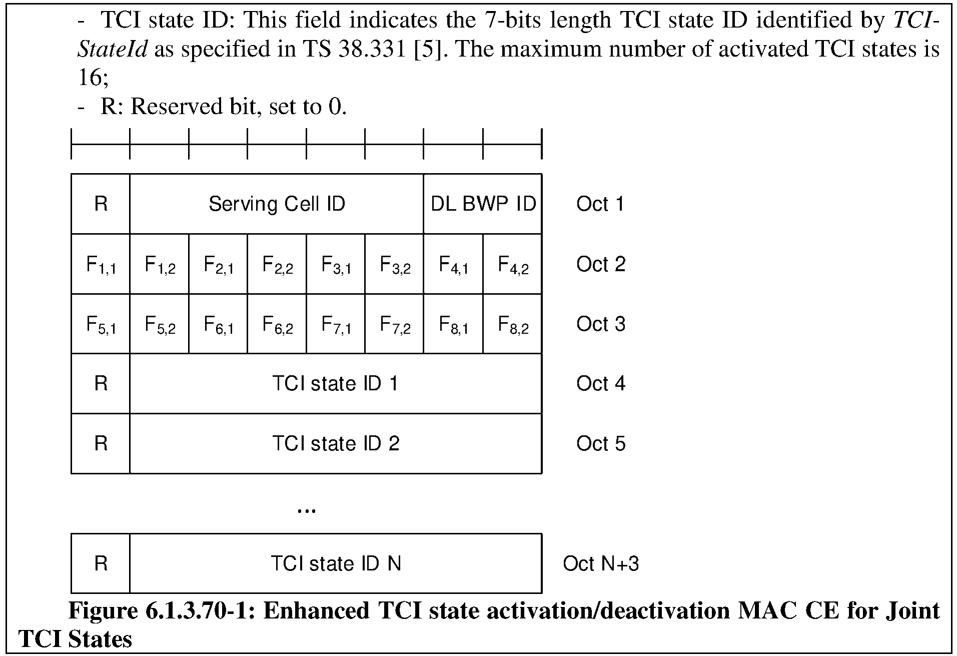

Unlike the unified TCI state activation/deactivation MAC CE, the enhanced unified TCI state activation/deactivation MAC CE for joint TCI states may jointly manage the TCI states of the uplink and downlink, and thus the UL BWP ID may be omitted. The Fi,j field indicates whether the j-th joint TCI state is present in the TCI state ID field associated with codepoint i of the DCI Transmission Configuration Indication field. Here, j may have a value of 1 or 2. Therefore, for the joint type as in step #2 of FIG. 11, up to two joint TCI states may correspond to each codepoint, and up to 16 joint TCI states may be activated.

The enhanced unified TCI state activation/deactivation MAC CE for separate TCI states may be defined as follows.

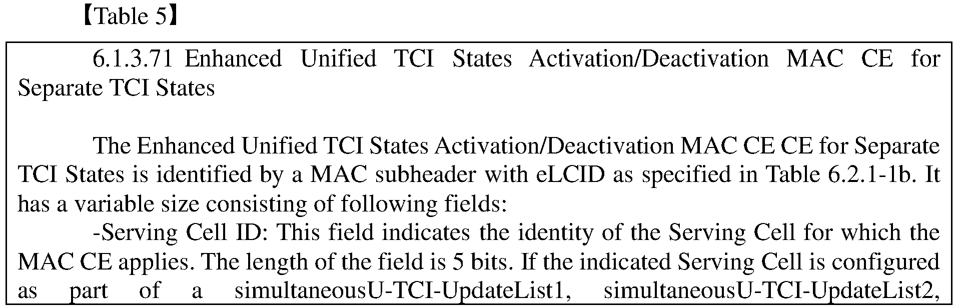

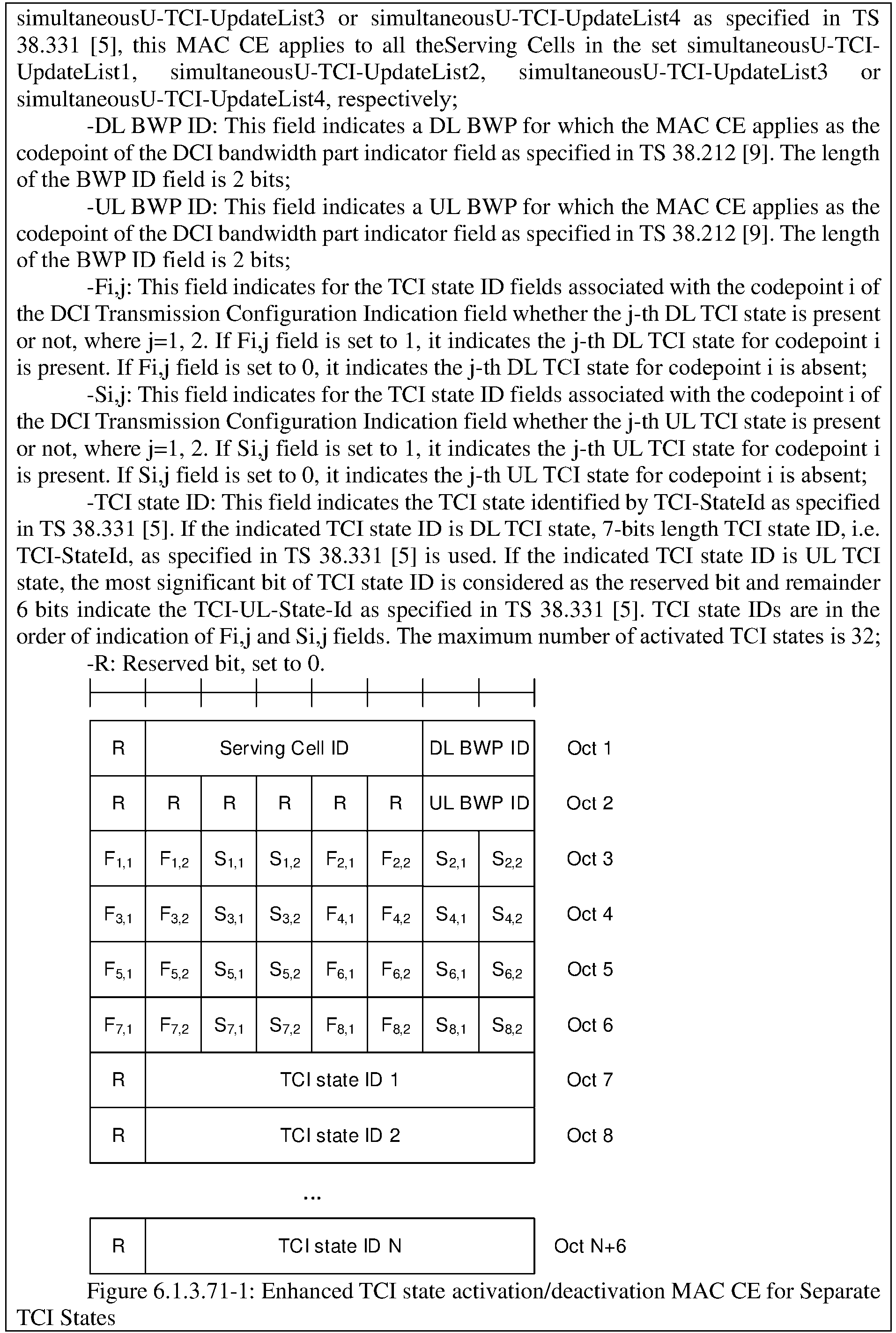

Unlike the unified TCI state activation/deactivation MAC CE, the enhanced unified TCI state activation/deactivation MAC CE for separate TCI states may include a Fi,j field and a Si,j field. The Fi,j field indicates whether the j-th DL TCI state is present in the TCI state ID field associated with codepoint i of the DCI Transmission Configuration Indication field. The Si,j field indicates whether the j-th UL TCI state is present in the TCI state ID field associated with codepoint i of the DCI Transmission Configuration Indication field. Therefore, in the case of the separate type of step #2 of FIG. 11, since up to two DL TCI states and up to two UL TCI states may correspond to each codepoint, up to 32 TCI states may be activated.

The base station may transmit the DCI to the terminal via the PDCCH. The DCI may include a transmission configuration indication field, and decoding may be performed using the TCI state corresponding to codepoint i of the transmission configuration indication field included in the DCI. As described above, the correspondence between codepoint i and the TCI state maybe indicated by a TCI state activation command.

The terminal may use the received DCI to utilize the TCI state as follows.

**[Table 6]**

| | | |
|---|---|---|
| For a CORESET other than a CORESET with index 0, if a UE is provided a single TCI state for a CORESET, or if the UE receives a MAC CE activation command for one or two of the provided TCI states for a CORESET, the UE assumes that the DM-RS antenna port associated with PDCCH receptions in the CORESET is quasi co-located with the one or more DL RS configured by the TCI states. For a CORESET with index 0, the UE expects that a CSI-RS configured with *qcl-Type* set to 'typeD' in a TCI state indicated by a MAC CE activation command for the CORESET is provided by a SS/PBCH block | | |
| | - if the UE receives a MAC CE activation command for one of the TCI states, the UE applies the activation command in the first slot that is after slot $k + 3 {N}_{slot}^{subframe , μ} +$ ${2}^{μ} ⋅ {k}_{mac}$ where *k* is the slot where the UE would transmit a PUCCH with HARQ-ACK information for the PDSCH providing the activation command, *µ* is the SCS configuration for the PUCCH in the slot when the activation command is applied, and *k*_{mac} is a number of slots for SCS configuration *µ* = 0 provided by *kmac* or *k*_{mac} = 0 if *kmac* is not provided. | |
| If a UE is provided *TCI-State* in *dl-OrJointTCl-StateList,* a DM-RS antenna port for PDCCH receptions in a CORESET, other than a CORESET with index 0, associated only with USS sets and/or Type3-PDCCH CSS sets, and a DM-RS antenna port for PDSCH receptions scheduled by DCI formats provided by PDCCH receptions in the CORESET are quasi co-located with reference signals provided by the indicated *TCI-State* [6*,* TS 38.214]. | | |
| If a UE is provided *followUnifiedTCI-State* for a CORESET, other than a CORESET with index 0, associated at least with CSS sets other than Type3-PDCCH CSS sets, a DM-RS antenna port for PDCCH receptions in the CORESET and a DM-RS antenna port for PDSCH receptions scheduled by DCI formats provided by PDCCH receptions in the CORESET are quasi co-located with reference signals provided by the indicated *TCI-State.* If a UE is provided *dl-OrJointTCl-StateList* and is indicated a first *TCI-State* and a second *TCI-State,* and is provided *apply-IndicatedTCIState* for a CORESET, other than a CORESET with index 0, | | |
| | - if the CORESET is associated only with USS sets and/or Type3-PDCCH CSS sets | |
| | | - if *apply-IndicatedTCIState* = 'first', the UE assumes that a DM-RS antenna port for PDCCH receptions in the CORESET is quasi co-located with the reference signals provided by the first *TCI-State* |
| | | - if *apply-IndicatedTCIState =* 'second', the UE assumes that a DM-RS antenna port for PDCCH receptions in the CORESET is quasi co-located with the reference signals provided by the second *TCI-State* |
| | | - if *apply-IndicatedTCIState* = 'both', the UE assumes that a DM-RS antenna port for PDCCH receptions in the CORESET is quasi co-located with the reference signals provided by the first *TCI-State* and the second *TCI-State* |
| | - if the CORESET is associated at least with CSS sets other than Type3-PDCCH CSS sets, | |
| | | - if *apply-IndicatedTCIState* = 'first', the UE assumes that a DM-RS antenna port for PDCCH receptions in the CORESET is quasi co-located with the reference signals provided by the first *TCI-State* |
| | | - if *apply-IndicatedTCIState =* 'second', the UE assumes that a DM-RS antenna port for PDCCH receptions in the CORESET is quasi co-located with the reference signals provided by the second *TCI-State* |
| | | - if *apply-IndicatedTCIState* = 'both', the UE assumes that a DM-RS antenna port for PDCCH receptions in the CORESET is quasi co-located with the reference signals provided by the first *TCI-State* and the second *TCI-State* |
| | | - if *apply-IndicatedTCIState* = 'none', the UE assumes that a DM-RS antenna port for PDCCH receptions in the CORESET is quasi co-located with the one or more DL RS configured by a TCI state indicated by a MAC CE activation command for the CORESET |
| If the UE is provided *dl-OrJointTCI-StateList* and | | |
| | - is not provided *coresetPoolIndex* or is provided *coresetPoolIndex* with a value of 0 for first CORESETs on an active DL BWP of a serving cell, | |
| | - is provided *coresetPoolIndex* with a value of 1 for second CORESETs on the active DL BWP of the serving cells, and | |
| | - is provided *followUnifiedTCI-State* for the first and second CORESETs, that do not include a CORESET with index 0 and are associated only with USS sets and/or Type3-PDCCH CSS sets, or with CSS sets other than Type3-PDCCH CSS sets, | |
| the UE | | |
| | - assumes that DM-RS antenna ports for PDCCH receptions in the first and second CORESETs, and DM-RS antenna ports for PDSCH receptions scheduled by DCI formats provided by PDCCH receptions in the first and second CORESETs, are quasi co-located with the reference signals provided by indicated *TCI-State* specific to the first and second CORESETs, respectively | |
| | - transmits PUSCH scheduled by DCI formats provided by PDCCH receptions in the first and second CORESETs using a spatial domain filter corresponding to *TCI-State* or *TCI-UL-State* specific to the first and second CORESETs, respectively. | |
| If a UE is provided two *coresetPoolIndex* values 0 and 1 for first and second CORESETs, or is not provided *coresetPoolIndex* value for first CORESETs and is provided *coresetPoolIndex* value of 1 for second CORESETs, respectively, a MAC CE command activating TCI states for the first or second CORESETs [11, TS 38.321] can include *coresetPoolIndex* value 0 or 1 | | |
| | - if the UE is provided *SSB_MTC_AdditionalPCI,* the activated TCI states for the first and/or the second CORESETs are for *physCellId* from *ServingCellConfigCommon* and the activated TCI states for either the first or the second CORESETs can be for *physCellId* from *additionalPCI.* | |
| If a UE is provided by *simultaneousTCI-UpdateList1* or *simultaneousTCI-UpdateList2* up to two lists of cells for simultaneous TCI state activation, the UE applies the antenna port quasi co-location provided by one or two *TCI-State* each with same activated *tci-StateID* value, to CORESETs with a same index in all configured DL BWPs of all configured cells in a list determined from a serving cell index, where one or two *tci-StateID,* the CORESET index, and the serving cell index are provided by a MAC CE command. | | |

That is, if the terminal receives a single TCI state for CORESET, or receives a MAC CE activation command for one or two of the TCI states provided for CORESET, the terminal may assume that the DM-RS antenna port associated with the PDCCH receptions within CORESET is in a QCL relationship with one or more DL RSs configured by the TCI states.

TCI states may be indicated by dividing them into two states. For example, if the terminal is provided with dl-OrJointTCI-StateList, TCI states may be indicated through a combination of two TCI states (first TCI state, second TCI state, first TCI state and second TCI state, none). For example, if the terminal indicates the first TCI state via apply-IndicatedTCISate, the terminal may assume that the reference signal provided by the first TCI state is in a QCL relationship with the DM-RS antenna port for PDCCH reception.

If dl-OrJointTCI-StateList is provided to the UE and coresetPoolIndex is not provided to the UE, or if a coresetPoolIndex with a value of 0 is provided for the first coreset in the active DL BWP of the serving cell, the UE may assume that the DM-RS antenna ports for receiving PDCCH in the first and second coresets and the DM-RS antenna ports for receiving PDSCH scheduled by the DCI format provided by the PDCCH reception in the first and second coresets are in a QCL relationship with the reference signal provided by the TCI state specific to the first and second CORESETs, respectively. Additionally, the UE may transmit PUSCH scheduled by the DCI format provided by the PDCCH reception in the first and second CORESETs using spatial domain filters corresponding to the TCI state specific to the first and second CORESETs, respectively.

The TCI state may be used to transmit uplink signals. The terminal may use the following procedure for uplink power control.

**[Table 7]**

| | | |
|---|---|---|
| 7 Uplink Power control | | |
| Uplink power control determines a power for PUSCH, PUCCH, SRS, and PRACH transmissions. | | |
| A UE does not expect to simultaneously maintain more than four pathloss estimates per serving cell for all PUSCH/PUCCH/SRS transmissions as described in clauses 7.1.1, 7.2.1, and 7.3.1, except for SRS | | |
| transmissions configured by *SRS-PosResourceSet* as described in clause 7.3.1. If the UE is provided a number of RS resources for pathloss estimation for PUSCH/PUCCH/SRS transmissions that is larger than 4, the UE maintains for pathloss estimation RS resources corresponding to RS resource indexes *q_{d}* as described in clauses 7.1.1, 7.2.1, and 7.3.1. If an RS resource updated by MAC CE, as described in clauses 7.1.1, 7.2.1 and 7.3.1, is one from the RS resources the UE maintains for pathloss estimation for PUSCH/PUCCH/SRS transmissions, the UE applies the pathloss estimation based on the RS resources starting from the first slot that is after slot $k + 3 ⋅ {N}_{slot}^{subframe , μ} + {2}^{μ} ⋅ {k}_{mac}$ where *k* is the slot where the UE would transmit a PUCCH or PUSCH with HARQ-ACK information for the PDSCH providing the MAC CE, *µ* is the SCS configuration for the PUCCH or PUSCH, respectively, that is determined in the slot when the MAC CE command is applied and *k*_{mac} is a number of slots for SCS configuration *µ* = 0 provided by *kmac* or *k*_{mac} = 0 if *kmac* is not provided. | | |
| A PUSCH/PUCCH/SRS/PRACH transmission occasion i is defined by a slot index ${n}_{s , f}^{μ}$ within a frame with system frame number *SFN,* a first symbol S within the slot, and a number of consecutive symbols *L.* For a PUSCH transmission with repetition Type B, a PUSCH transmission occasion is a nominal repetition [6, TS 38.214]. | | |
| In the remaining of this clause, if a UE is provided *TCI-State* in *dl-OrJointTCI-StateList* or *TCI-UL-State,* and for each indicated one or two *TCI-State* or *TCI-UL-State* of a PUSCH, PUCCH, or SRS transmission occasion as described in [6, TS 38.214] | | |
| | - in clauses 7.1.1, 7.2.1, and 7.3.1, the RS index *q_{d}* for obtaining the downlink pathloss estimate for PUSCH, PUCCH, and SRS transmission is provided by *pathlossReferenceRS-Id-r17* associated with or included in the indicated *TCI-State* or *TCI-UL-State* except for SRS transmission that is not provided *followUnifiedTCI-StateSRS* | |
| | - in clause 7.1.1, if *p0AlphaSetforPUSCH* is provided, the values of *P*_{O_UE_PUSCH,*b,f,c*}(*j*), *α_{b,f,c}*(*j*), and the PUSCH power control adjustment state *l* are provided by *p0AlphaSetforPUSCH* associated with the indicated *TCI-State* or *TCI-UL-State* | |
| | - in clause 7.2.1, if *p0AlphaSetforPUCCH* is provided, the values of *P*_{O_UE_PUCCH}(*qᵤ*) and the PUCCH power control adjustment state *l* are provided by *p0AlphaSetforPUCCH* associated with the indicated *TCI-State* or *TCI-UL-State* | |
| | - in clause 7.3.1, if *p0AlphaSetforSRS* is provided, | |
| | | - if *followUnifiedTCI-StateSRS* is provided for a SRS resource set, the values of *P*_{O_UE_SRS*,b,f,c*}(*qₛ*), *α*_{SRS*,b,f,c*}(*qₛ*), and SRS power control adjustment state *l* are provided by *p0AlphaSetforSRS* associated with the indicated *TCI-State* or *TCI-UL-State* |
| | | - else, if *followUnifiedTCI-StateSRS* is not provided for a SRS resource set and for a SRS resource from the SRS resource set, the values of *P*_{O_UE_SRS*,b,f,c*}(*qₛ*), *α*_{SRS,*b*,*f*,*c*}(*qₛ*) , and SRS power control adjustment state *l* are provided by *p0AlphaSetforSRS* associated with *TCI-State* or *TCI-UL-State* of an SRS resource with lowest *SRS-ResourceId* in the SRS resource set and a RS index *q_{d}* for obtaining a pathloss estimate for the SRS transmission is provided by *pathlossReferenceRS-Id-r17* associated with or included in the *TCI-State* or *TCI-UL-State* of an SRS resource with lowest *SRS-ResourceId* in the SRS resource set *P*_{O_SRS*,b,f,c*}(*qₛ*) is the sum of the component *P*_{O_UE_SRS*,b,f,c*}(*qₛ*) and a component |
| | *p*0 provided by *SRS-ResourceSet* corresponding to the SRS resource set. | |
| In the remaining of this clause, if a PDCCH reception by a UE includes two PDCCH candidates from corresponding search space sets, as described in clause 10.1 | | |
| | - a PDCCH monitoring occasion is the union of the PDCCH monitoring occasions for the two PDCCH candidates | |
| | - the end of the PDCCH reception is the end of the PDCCH candidate that ends later | |
| The PDCCH reception includes the two PDCCH candidates also when the UE is not required to monitor one of the two PDCCH candidates as described in clauses 10 (except clause 10.4), 11.1, 11.1.1 and 17.2. | | |

Uplink power control may be used when determining power for PUSCH, PUCCH, SRS, or PRACH transmission. The UE may be configured not to maintain more than four path loss estimates per serving cell simultaneously for PUSCH/PUCCH/SRS transmissions.

For PUSCH, PUCCH, SRS, or PRACH transmissions, a transmission occasion may be defined by the slot index within the frame, the first symbol within the slot, and the number of consecutive symbols. If the terminal receives TCI states in dl-OrJointTCI-StateList, an RS index for estimating downlink path loss for PUSCH, PUCCH, or SRS transmissions may be provided for each of the one or two TCI states for a PUSCH, PUCCH, or SRS transmission occasion.

Power control values may be set explicitly or implicitly. For example, if followUnifiedTCI-StateSRS is set, power control values are provided from p0AlphaSetforSRS associated with the TCI state. If followUnifiedTCI-StateSRS is not set, power control values and RS indices for path loss estimation may be provided from the TCI state associated with the SRS resource having the lowest SRS-ResourceId. In this case, the total SRS power value may be determined based on the sum of individual SRS power control values and additional components according to the SRS resource set.

Hereinafter, an initial connection procedure between a terminal and a base station will be described. When the initial connection procedure with the base station is performed due to reasons such as the terminal's power on/off operation or out of coverage, an identification procedure between the base station and the terminal may be required. First, the terminal may perform an initial cell search operation with the base station. The terminal may perform monitoring to receive a synchronization signal. The synchronization signal may be at least one of a PSS (primary synchronization signal) or a SSS (secondary synchronization signal). The terminal may obtain intra-cell broadcast information by receiving a physical broadcast channel (PBCH) signal from the base station. Based on the physical broadcast channel, the terminal may obtain information about the cell using at least one of an MIB or a SIB. A block containing the PSS, SSS, and PBCH may be referred to as an SSB (synchronization signal block).

The terminal may perform a random access procedure. The terminal may transmit a preamble to the base station and receive a random access response (RAR) from the base station. The RAR message may include a temporary identifier. The terminal may transmit an MSG3 (or RRC connection request message) using the scheduling information within the RAR, and the base station may perform a contention resolution procedure by transmitting an MSG4 (or contention resolution message) to the terminal in response to the MSG3.

The base station may perform beam management based on RACH occasions used for preamble transmission used in random access procedures. For example, the base station may identify the beam in which the terminal received a synchronization signal based on the RACH occasion in which the preamble is transmitted. As described above, a synchronization signal may also be included as a reference signal to indicate a QCL relationship, and QCL relationships may be established based on the SSB received through the initial access procedure.

Additionally, a channel measurement procedure may be performed for beam management. The terminal may receive a reference signal from the base station. Based on this, the terminal may report channel state information (CSI) to the base station. The channel state information may include at least one of reference signal received power (RSRP), reference signal received quality (RSRQ), and signal-to-noise ratio (SNR). The base station may use the received channel state information to adjust beamforming for the terminal or to optimize radio resource allocation. For channel measurement, the base station may transmit configuration information for channel measurement to the terminal. The configuration information for channel measurement may include information related to a measurement target, a measurement period, etc.

The beams of the base station and terminal may manage beam setup through artificial intelligence (AI). For convenience, Beam Set B refers to a beam set for which measurement is performed as input to an AI/ML model, and Set A refers to a beam set determined based on the inference of the AI/ML model. Beam Set A and Beam Set B may be beam information on the same frequency range.

Artificial intelligence may be used to infer spatial domain downlink beams for beam set A based on measurement of beam set B. As another example, artificial intelligence may be used to infer temporal downlink beams for beam set A based on past measurement results of beam set B. Here, beam set A and beam set B may be different sets, or beam set B may be a subset of beam set A.

In addition, the input to the artificial intelligence model may be formed in various combinations. For example, the input to the artificial intelligence may include at least one of an L1-RSRP measurement based on beam set B, other auxiliary information, a CIR (channel impulse response) based on beam set B, and a downlink Tx/Rx beam ID associated with the L1-RSRP measurement of beam set B.

The aforementioned artificial intelligence model may be designed to infer a beam including at least one of a downlink reception beam and a downlink transmission beam. Additionally, the output of the artificial intelligence model may include at least one of a transmission beam, a reception beam, the L1-RSRP of the transmission beam, the L1-RSRP of the reception beam, the angle of the transmission beam, the angle of the reception beam, and other information.

The beam management method using an artificial intelligence model is not limited to the above-described method. The artificial intelligence model may be set in various ways by configuring input and output with various combinations of settings for beam set A and beam set B, performance monitoring, data collection, and auxiliary information.

Furthermore, learning and inference methods may be implemented in various ways. For example, artificial intelligence may be learned or trained using AI/ML (artificial intelligence/machine learning) models. Learning and training may be performed by a network or a UE. Additionally, learning and inference may be performed on different devices. For example, learning may be performed on a network and inference on a terminal. Partial learning may be performed in such a way that part of the learning is performed on a first device and another part on a second device. Similarly to learning, partial inference may be performed using multiple devices. Input data for inference may also be generated in various ways. For example, input data may be generated in the UE, and inference may be performed using the input data in a network. Additionally, input data generated in the UE may be processed internally within the UE to enable inference.

A DL sTRP/UL mTRP scenario is a single-DCI-based mTRP communication scheme for a UL. For an initial access procedure to acquire synchronization, a UL timing advance (TA), beam alignment, and a path loss (PL) with a TRP that performs only UL communication, in addition to a TRP capable of both DL and UL communication, reception of a signal such as an SSB is required. However, in a situation in which there is no DL signal to be received by the UE through a TRP that performs only UL communication, an access scheme for operating the DL sTRP/UL mTRP scenario is required. Therefore, the present disclosure proposes a technique for access between a UE and a TRP so that operation of the DL sTRP/UL mTRP scenario becomes feasible.

Prior to describing the embodiments of the present disclosure, matters under discussion in standardization may be summarized as follows.

For the asymmetric DL sTRP/UL mTRP deployment scenarios, association of a UL transmission configuration information (TCI) state with a PL offset is supported.
- When a UL TCI state associated with a PL offset is applied for the PUSCH/PUCCH/SRS transmission, the UE needs to calculate the Tx power of the PUSCH/PUCCH/SRS based on the DL PL RS and PL offset associated with this UL TCI state.
   ∘ The legacy uplink power control formulation is used by replacing with UL PL which is derived from the DL PL RS and the PL offset.
   ∘ For further study (FFS): The UE may update UL PL in a way that new UL PL = current UL PL + an update delta indicated by the NW.
- Note: it does not intend to increase the number of maintained PLs per cell.
- FFS: whether to support associating joint TCI state (if supported) with a PL offset.

Further study regarding whether/how to apply a PL offset on PDCCH-order PRACH transmission too.
- FFS: how to determine the Tx beam of PRACH towards UL TRP.
- Note: this does not imply to support 2 TA for single-DCI based system.

Referring to TS 38.212, DCI format 1_0 used as a PDCCH order is as shown in Table 8 below.

**[ Table 8]**

| |
|---|
| DCI format 1_0 is used for the scheduling of PDSCH in one DL cell. |
| The following information is transmitted by means of the DCI format 1_0 with CRC scrambled by C-RNTI or CS-RNTI or MCS-C-RNTI: |
| - Identifier for DCI formats - 1 bits |
| - The value of this bit field is always set to 1, indicating a DL DCI format |
| $\left⌈{log}_{2}\left({N}_{RB}^{DL , BWP}\left({N}_{RB}^{DL , BWP}+1\right)\right./2\right⌉$ - Frequency domain resource assignment - bits where ${N}_{RB}^{DL , BWP}$ is given by Clause 7.3.1.0 |
| If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows: |
| - Random Access Preamble index - 6 bits according to ra-PreambleIndex in Clause 5.1.2 of [8, TS38.321] |
| - UL/SUL indicator - 1 bit. If the value of the "Random Access Preamble index" is not all zeros and if the UE is configured with *supplementary Uplink* in*ServingCellConfig* in the cell, this field indicates which UL carrier in the cell to transmitthe PRACH according to Table 7.3.1.1.1-1; otherwise, this field is reserved |
| - SS/PBCH index - 6 bits. If the value of the "Random Access Preamble index" is not all zeros, this field indicates the SS/PBCH that shall be used to determine the RACH occasion for the PRACH transmission; otherwise, this field is reserved. |
| - PRACH Mask index - 4 bits. If the value of the "Random Access Preamble index" is not all zeros, this field indicates the RACH occasion associated with the SS/PBCH indicated by "SS/PBCH index" for the PRACH transmission, according to Clause 5.1.1 of [8, TS38.321]; otherwise, this field is reserved |
| - Cell indicator - $\left⌈{log}_{2}\left(C+1\right)\right⌉$ bits indicating the cell for the corresponding PRACH transmission if the UE is configured with higher layer parameter |
| *EarlyUlSyncConfig,* where C is the number of candidate cells configured with higher layer parameter *EarlyUlSyncConfig;* 0 bit otherwise. The bit field index 0 of the cell indicator field is mapped to the serving cell, and other bit field indexes are mapped to the candidate cells configured with higher layer parameter *EarlyUlSyncConfig* according to an ascending order of a candidate identity configured by *ltm-CandidateId,* with the bit field index 1 mapped to the candidate cell with the smallest candidate identity. |
| - PRACH association indicator - 0 or 1 bit |
| - 1bit if the UE is provided with *tag-Id2,* and the UE is not provided *coresetPoolIndex* or is provided *coresetPoolIndex* with value 0 for the first CORESETs, and is provided *coresetPoolIndex* with value 1 for the second CORESETs. |
| - This field indicates the PCI associated with the PRACH transmission if the UE is provided *SSB-MTC-AddtionalPCI.* The bit field index 0 of this field is mapped to the PCI of the serving cell, and the bit field index 1 of this field is mapped to the active additional PCI. |
| - This field indicates the PL-RS for the PRACH transmission if the UE is not provided *SSB-MTC-AddtionalPCI.* The bit field index 0 of this field is mapped to the DL RS that the DM-RS of the PDCCH order is quasi-collocated with, and the bit field index 1 of this field is mapped to the SS/PBCH indicated by the SS/PBCH index field in this DCI format. |
| - 0 bit otherwise. |
| - PRACH retransmission indicator - 0 or 1 bit |
| - 1bit if the UE is configured with higher layer parameter *EarlyUlSyncConfig.* This field indicates initial transmission or retransmission of PRACH according to Table 7.3.1.2.1-3 if the cell indicated by Cell indicator field is a candidate cell, and this field is reserved if the cell indicated by Cell indicator field is a serving cell but not a candidate cell. |
| - 0 bit otherwise. |

In TS 38.321, a PRACH mask index is defined as shown in Table 9 below.

**[Table 9]**

| PRACH Mask Index/ msgA-SSB-SharedRO-MaskIndex/ ssb-SharedRO-MaskIndex | lowed PRACH occasion(s) of SSB |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Reserved |
| 12 | Reserved |
| 13 | Reserved |
| 14 | Reserved |
| 15 | Reserved |

In TS 38.331, a RACH-ConfigCommon information element (IE) for configuration of a PRACH is defined as shown in Table 10 below.

**[Table 10]**

| | |
|---|---|
| 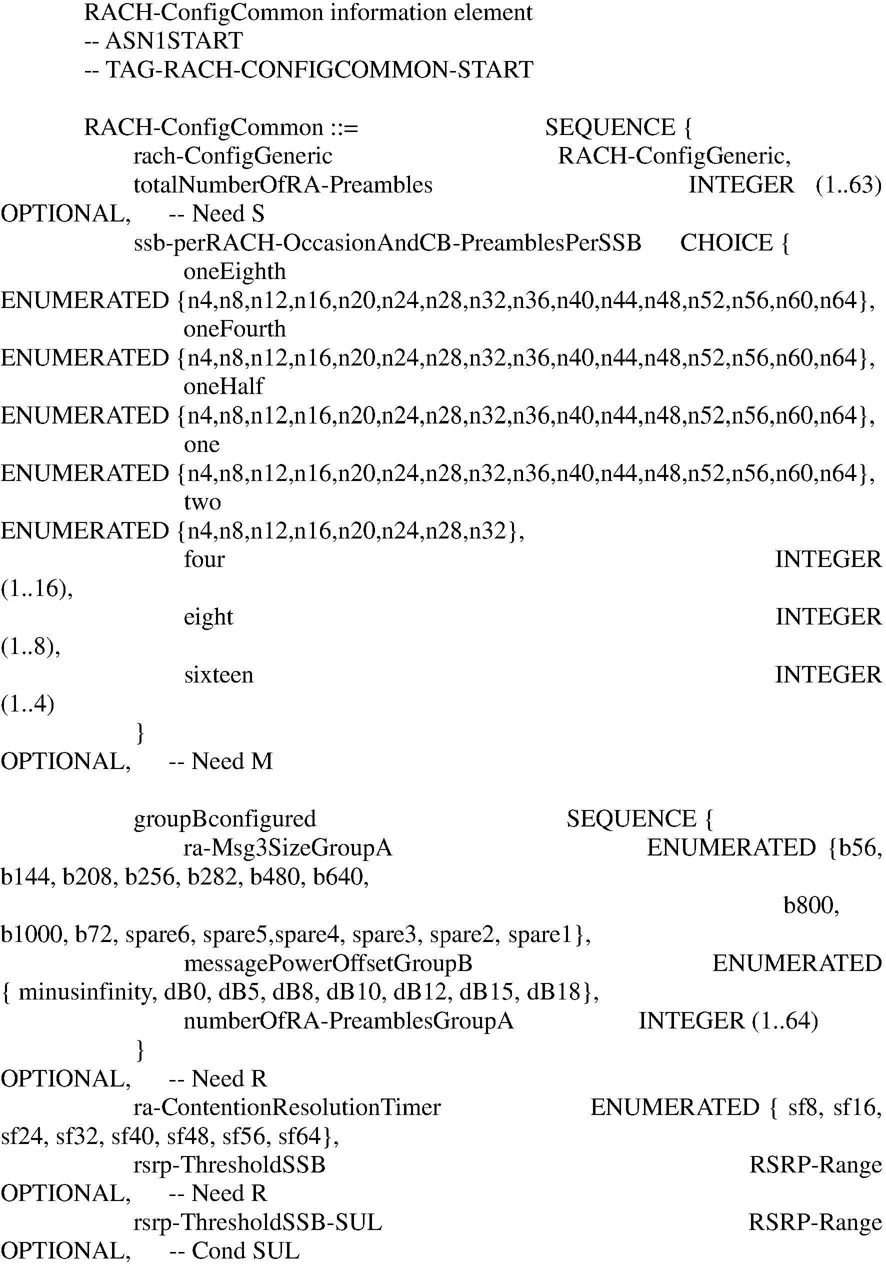 | |
| 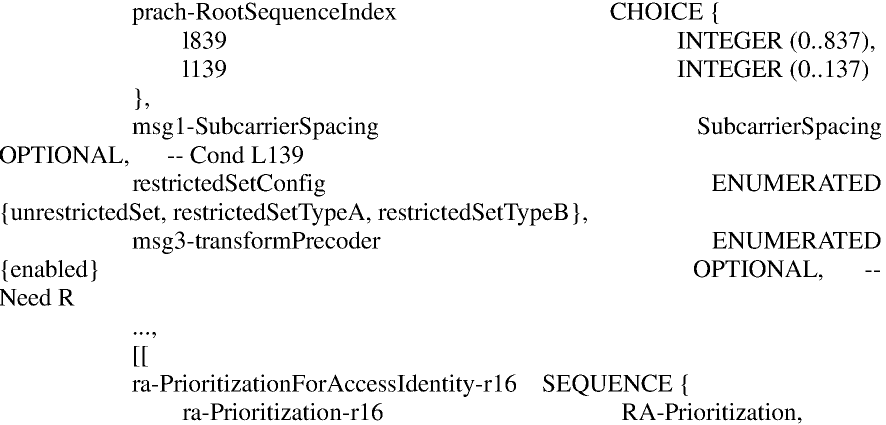 | |
| | ·ssb-perRACH-OccasionAndCB-PreamblesPerSSB |
| The meaning of this field is twofold: the CHOICE conveys the information about the number of SSBs per RACH occasion. Value oneEighth corresponds to one SSB associated with 8 RACH occasions, value oneFourth corresponds to one SSB associated with 4 RACH occasions, and so on. The ENUMERATED part indicates the number of Contention Based preambles per SSB. Value n4 corresponds to 4 Contention Based preambles per SSB, value n8 corresponds to 8 Contention Based preambles per SSB, and so on. The total number of CB preambles in a RACH occasion is given by CB-preambles-per-SSB * max(1, SSB-per-rach-occasion). See TS 38.213 [13]. | |

In TS 38.331, a RACH-ConfigCommonTwoStepRA IE for configuration of a PRACH is defined as shown in Table 11 below.

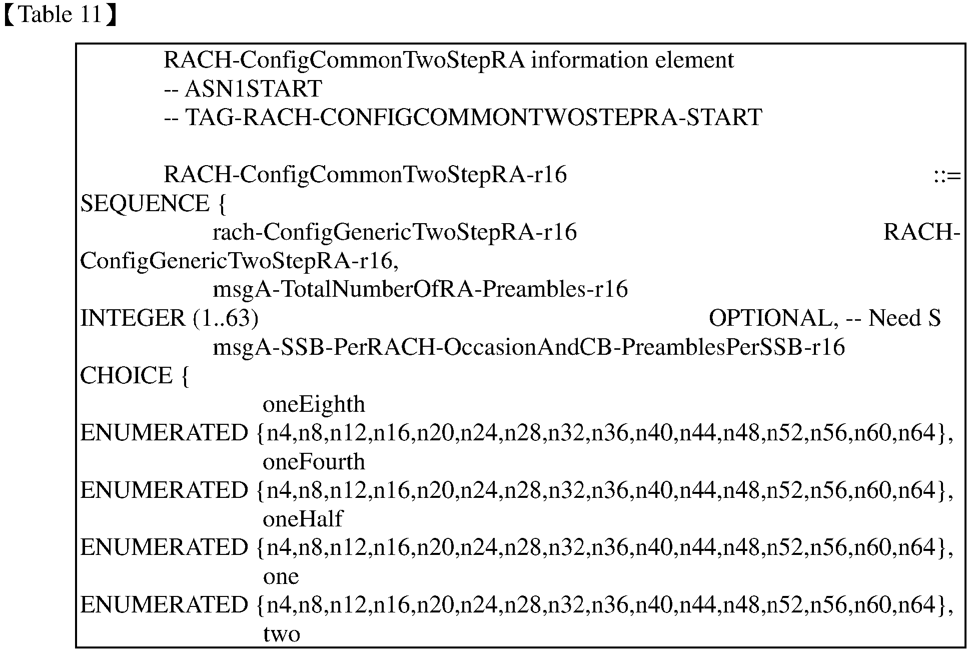

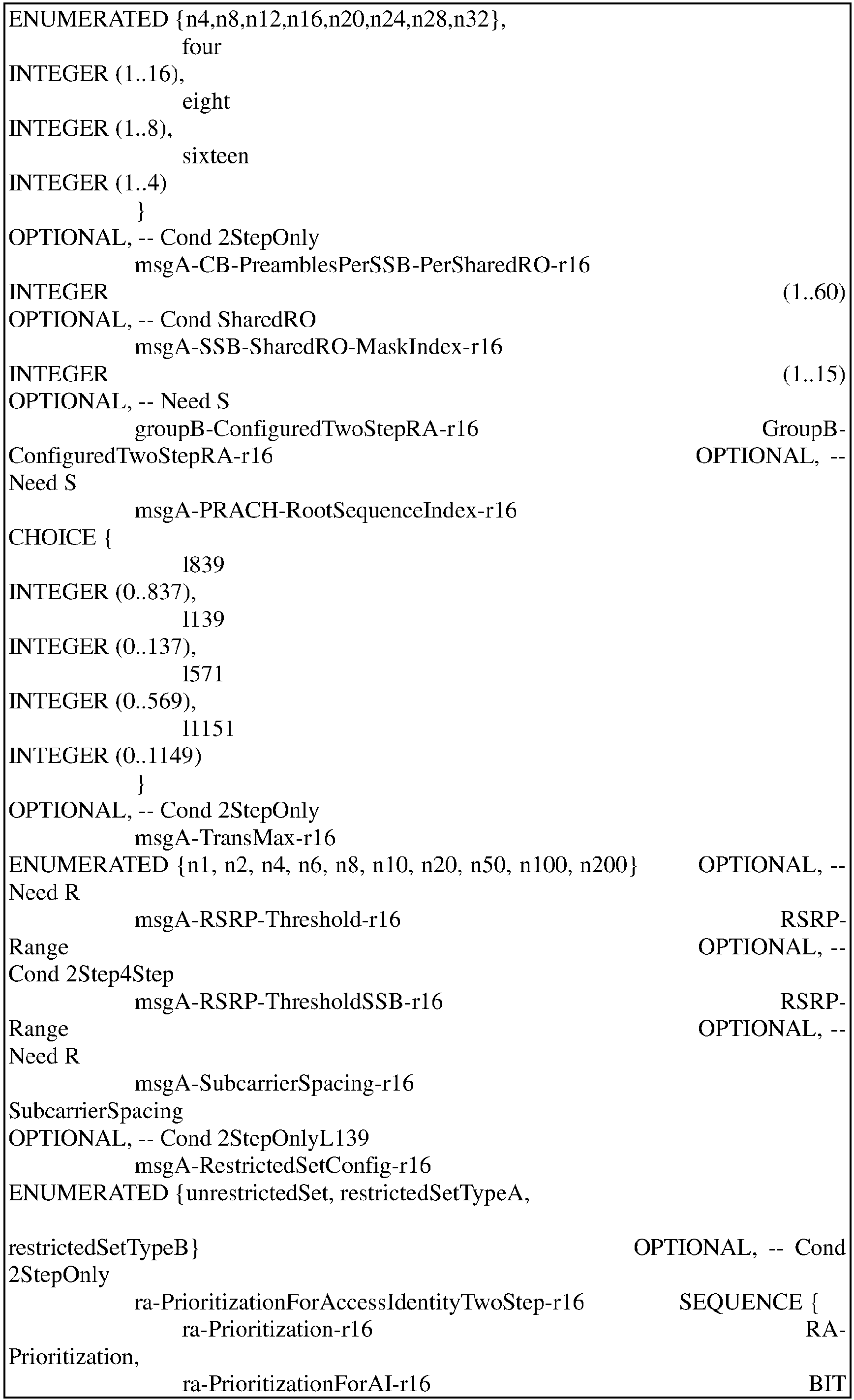

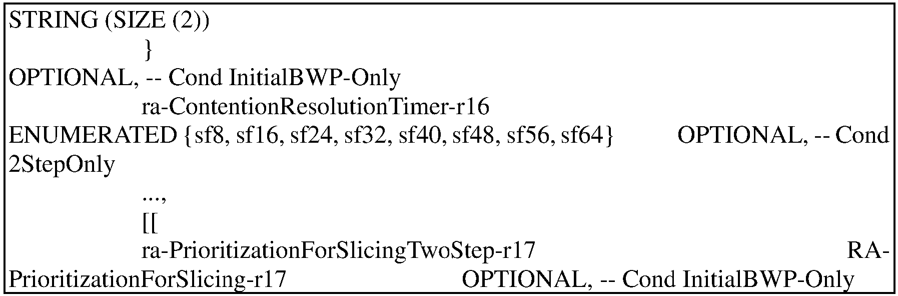

In TS 38.331, a RACH-ConfigDedicated IE for configuration of a PRACH is defined as shown in Table 12 below.

**[Table 12]**

| | |
|---|---|
| 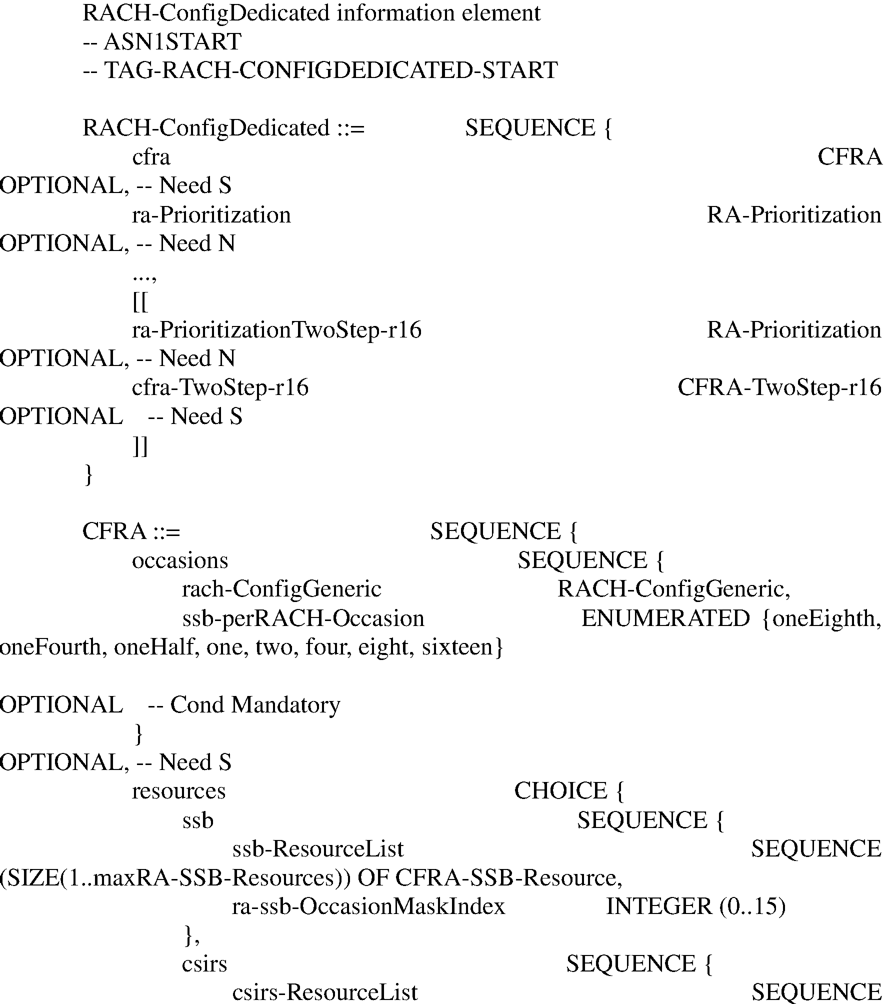 | |
| 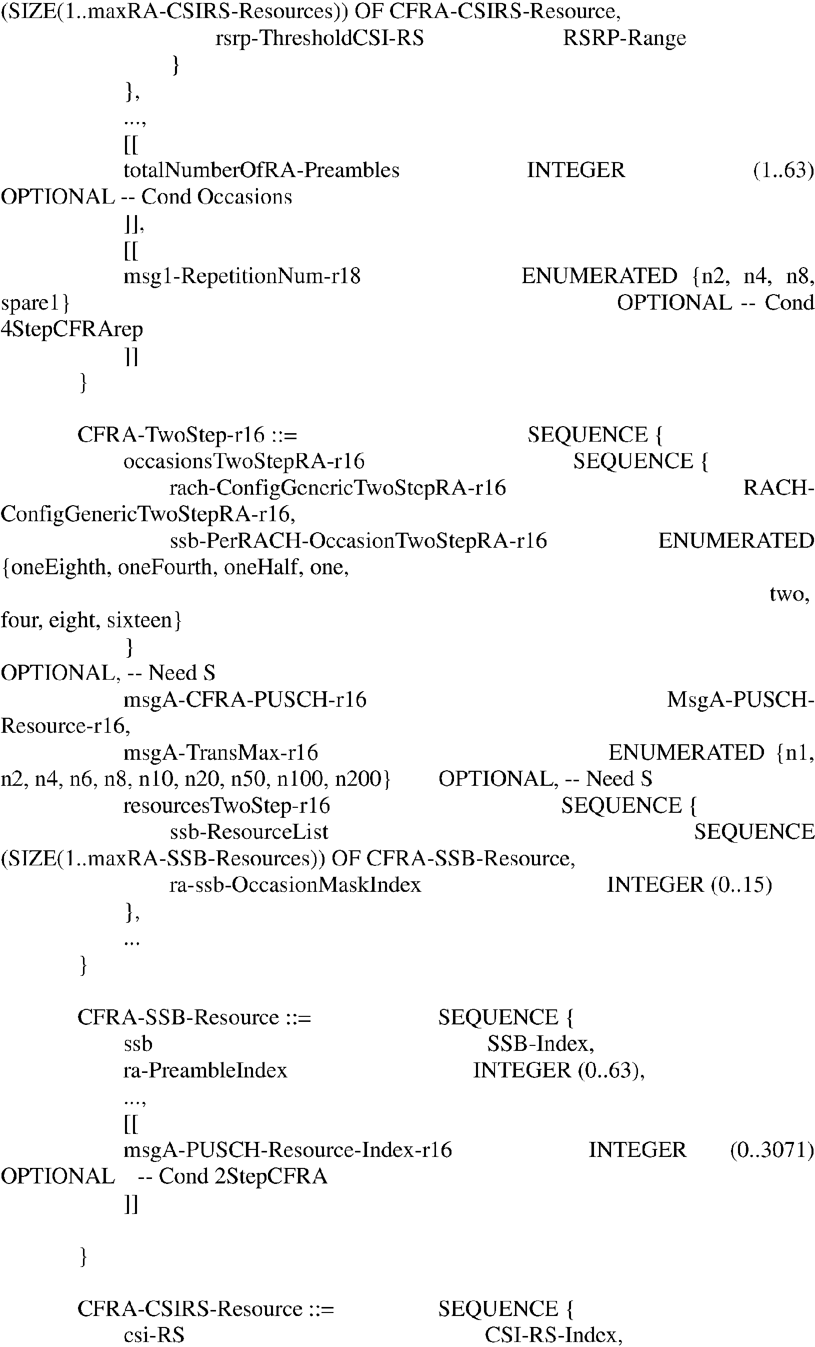 | |
| 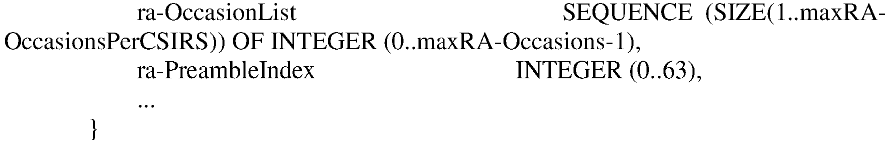 | |
| | ·csi-RS |
| The ID of a CSI-RS resource defined in the measurement object associated with this serving cell. | |
| | ·ra-OccasionList |
| RA occasions that the UE shall use when performing CF-RA upon selecting the candidate beam identified by this CSI-RS. The network ensures that the RA occasion indexes provided herein are also configured by prach-ConfigurationIndex and msg1-FDM. Each RACH occasion is sequentially numbered, first, in increasing order of frequency resource indexes for frequency multiplexed PRACH occasions; second, in increasing order of time resource indexes for time multiplexed PRACH occasions within a PRACH slot and Third, in increasing order of indexes for PRACH slots. | |
| | ·ra-PreambleIndex |
| | The RA preamble index to use in the RA occasions associated with this CSI-RS. |
| | ·msg1-RepetitionNum |
| Indicates the MSG1 repetition number used for contention free 4-step random access type in TS 38.321 [3]. If this field is absent, the UE performs contention free 4-step random access without MSG1-Repetitions. | |
| | ·occasions |
| RA occasions for contention free random access. If the field is absent, the UE uses the RA occasions configured in RACH-ConfigCommon in the first active UL BWP. | |
| | ·ra-ssb-OccasionMaskIndex |
| | Explicitly signalled PRACH Mask Index for RA Resource selection in TS 38.321 |
| [3]. The mask is valid for all SSB resources signalled in ssb-ResourceList. | |
| | ·rach-ConfigGeneric |
| Configuration of contention free random access occasions for CFRA. The UE shall ignore preambleReceivedTargetPower, preambleTransMax, powerRampingStep, ra-ResponseWindow signaled within this field and use the corresponding values provided in RACH-ConfigCommon. | |
| | ·ssb-perRACH-Occasion |
| | Number of SSBs per RACH occasion. |
| | ·totalNumberOfRA-Preambles |
| Total number of preambles used for contention free random access in the RACH resources defined in CFRA, excluding preambles used for other purposes (e.g. for SI request). If the field is absent but the field occasions is present, the UE may assume all the 64 preambles are for RA. The setting should be consistent with the setting of ssb-perRACH-Occasion, if present, i.e. it should be a multiple of the number of SSBs per RACH occasion. | |
| | ·msgA-PUSCH-Resource-Index |
| Identifies the index of the PUSCH resource used for MSGA CFRA. The PUSCH resource index indicates a valid PUSCH occasion (as specified in TS 38.213 [13], clause 8.1A) and the associated DMRS resources corresponding to a PRACH slot. The PUSCH resource indexes are sequentially numbered and are mapped to valid PUSCH occasions corresponding to a PRACH slot which are ordered, first, in increasing order of frequency resource indexes for frequency multiplexed PUSCH occasions; second, in increasing order of DMRS resource indexes within a PUSCH occasion, where a DMR\mathbit{S}_{\mathbit{id}} resource index is determined first in an ascending | |
| order of a DMRS port index and then in an ascending order of a DMRS sequence index, third in increasing order of time resource indexes for time multiplexed PUSCH occasions within a PUSCH slot and fourth, in increasing order of indexes for PUSCH slots. For the case of contention free 2-step random access type, if this field is absent, the UE shall use the value 0. | |
| | ·ra-PreambleIndex |
| The preamble index that the UE shall use when performing CF-RA upon selecting the candidate beams identified by this SSB. | |
| | ·ssb |
| | The ID of an SSB transmitted by this serving cell. |

In TS 38.331, a RACH-ConfigGeneric IE for configuration of a PRACH is defined as shown in Table 13 below.

**[Table 13]**

| | |
|---|---|
| 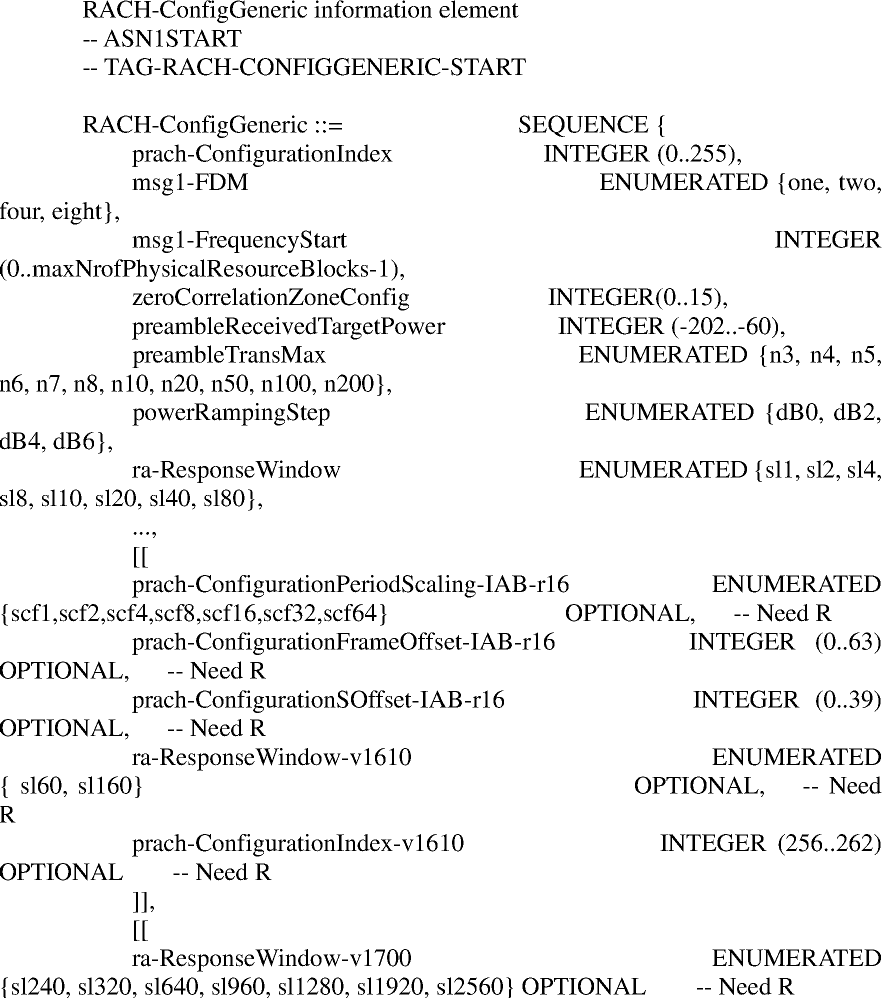 | |
| 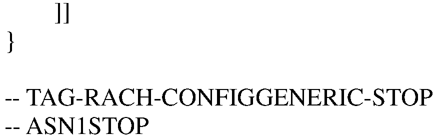 | |
| | ·msg1-FDM |
| The number of PRACH transmission occasions FDMed in one time instance. (see TS 38.211 [16], clause 6.3.3.2). | |
| | ·msg1-FrequencyStart |
| Offset of lowest PRACH transmission occasion in frequency domain with respective to PRB 0. The value is configured so that the corresponding RACH resource is entirely within the bandwidth of the UL BWP. (see TS 38.211 [16], clause 6.3.3.2). | |
| | ·powerRampingStep |
| Power ramping steps for PRACH (see TS 38.321 [3],5.1.3). This field is set to the same value for different repetition numbers associated with a specific FeatureCombination. | |
| | ·prach-ConfigurationIndex |
| short | PRACH configuration index. For prach-ConfigurationIndex configured under beamFailureRecoveryConfig, the prach-ConfigurationIndex can only correspond to the preamble format, (see TS 38.211 [16], clause 6.3.3.2). If the field prach-ConfigurationIndex-v1610 is present, the UE shall ignore the value provided in prach-ConfigurationIndex (without suffix). |
| | ·preambleReceivedTargetPower |
| The target power level at the network receiver side (see TS 38.213 [13], clause 7.4, TS 38.321 [3], clauses 5.1.2, 5.1.3). Only multiples of 2 dBm may be chosen (e.g. - 202, -200, -198, ...). This field is set to the same value for different repetition numbers associated with a specific FeatureCombination. | |
| | ·preambleTransMax |
| Max number of RA preamble transmission performed before declaring a failure (see TS 38.321 [3], clauses 5.1.4, 5.1.5). | |
| | ·ra-ResponseWindow |
| Msg2 (RAR) window length in number of slots. The network configures a value lower than or equal to 10 ms when Msg2 is transmitted in licensed spectrum and a value lower than or equal to 40 ms when Msg2 is transmitted with shared spectrum channel access (see TS 38.321 [3], clause 5.1.4). UE ignores the field if included in SCellConfig. If ra-ResponseWindow-v1610 or ra-ResponseWindow-v1700 is signalled, UE shall ignore the ra-ResponseWindow (without suffix). The field ra-ResponseWindow-v1700 is applicable to SCS 480 kHz and SCS 960 kHz. | |

Hereinafter, for convenience of description, the present disclosure assumes a DL sTRP/UL 2TRP environment in which a UE uses one TRP that performs DL and UL communication and one TRP that performs only UL communication. However, the embodiments described below may also be applied to a DL sTRP/UL mTRP environment in which a DL sTRP and three or more UL TRPs are used. In the following description, a first TRP is a TRP that provides both DL and UL communication with a UE, and a second TRP is a TRP that provides only UL communication with a UE. Here, the first TRP and the second TRP may belong to one base station (e.g., a gNB) or may belong to different base stations. When the first TRP and the second TRP belong to different base stations, the base stations may have a link for signaling according to the embodiments described below.

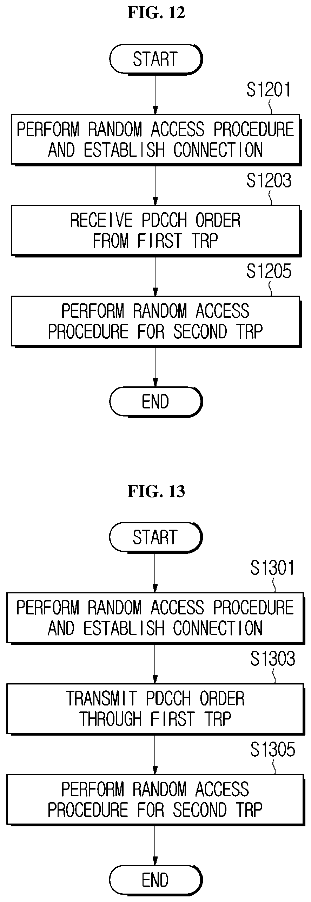

FIG. 12 illustrates an example of a procedure for performing random access of a terminal according to an embodiment of the present disclosure. FIG. 12 exemplifies a method of operating the terminal.

Referring to FIG. 12, in step S1201, the terminal performs a random access procedure to access a base station including a first TRP and a second TRP, and establishes a connection. For example, the terminal may receive a synchronization signal, receive system information, transmit a random access preamble, receive a random access response, and transmit and/or receive at least one message for connection setup and/or contention resolution. Thus, the terminal may establish a connection to the base station and perform communication with the base station. Here, with respect to a TRP used for the random access procedure, transmission and/or reception parameters identical or similar to those of the first TRP may be applied (e.g., establishment of a QCL relationship, inclusion in the same TAG, etc.). Accordingly, the terminal may acquire control information, parameters, and configuration information that are applied to transmission and/or reception with respect to the first TRP.

In step S1203, the terminal receives a PDCCH order from the first TRP. The PDCCH order is signaling that indicates initiation of a random access procedure. For example, the PDCCH order is DCI having a designated DCI format (e.g., format 1_0 or a format defined to indicate random access to another TRP), in which a specific parameter (e.g., frequency domain resource allocation) may be set to a designated value. Here, according to an embodiment of the present disclosure, the PDCCH order may include information that indicates or induces performance of a random access procedure for the second TRP. For example, the information that indicates or induces performance of the random access procedure for the second TRP may be expressed explicitly or implicitly.

In step S1205, the terminal performs the random access procedure for the second TRP. The terminal performs the random access procedure in response to reception of the PDCCH order. That is, the terminal may transmit a random access preamble and receive a response thereto (e.g., a random access response message or a message B). Here, the response is received through DL and may be received from the first TRP. In this case, the terminal may recognize whether the random access is performed for the second TRP based on the PDCCH order or based on the response.

FIG. 13 illustrates an example of a procedure for performing random access of a base station according to an embodiment of the present disclosure. FIG. 13 exemplifies a method of operating the base station.

Referring to FIG. 13, in step S1301, the base station performs a random access procedure for access of a terminal and establishes a connection. For example, the base station may transmit a synchronization signal, transmit system information, receive a random access preamble from the terminal, transmit a random access response, and receive and/or transmit at least one message for connection setup and/or contention resolution. Thus, the terminal may establish a connection and perform communication with the base station. Here, the terminal may acquire control information, parameters, and configuration information that are applied to transmission and/or reception with respect to a first TRP.

In step S1303, the base station transmits a PDCCH order through the first TRP. The PDCCH order is signaling that indicates initiation of a random access procedure. For example, the PDCCH order is DCI having a designated DCI format (e.g., format 1_0 or a format defined to indicate random access to another TRP), in which a specific parameter (e.g., frequency domain resource allocation) may be set to a designated value. Here, according to an embodiment of the present disclosure, the PDCCH order may include information that indicates or induces performance of a random access procedure for the second TRP. For example, the information that indicates or induces performance of the random access procedure for the second TRP may be expressed explicitly or implicitly.

In step S1305, the base station performs the random access procedure for the second TRP. That is, the base station performs the random access procedure based on the PDCCH order. That is, the base station may receive a random access preamble through the second TRP and transmit a response thereto (e.g., a random access response message or a message B). Here, since the response is transmitted through DL, the response may be transmitted through the first TRP. In this case, according to an embodiment, the base station may transmit, through the response, information notifying whether the random access is performed for the second TRP.

The procedure described with reference to FIG. 13 is an embodiment for a case in which the first TRP and the second TRP belong to one base station. When the first TRP belongs to a first base station and the second TRP belongs to a second base station, step S1305 may be performed by the second base station. In this case, the first base station may receive, from the second base station, information included in a message that is to be transmitted through the DL (e.g., information for a response to a random access preamble) and may transmit a message including the received information to the terminal.

Hereinafter, the present disclosure describes various embodiments of random access to a second TRP that supports only UL communication. Hereinafter, for convenience of description, it is assumed that a UE is connected with a first TRP through a random access procedure. In various embodiments described below, a PDCCH order-based random access procedure is performed for initial access and connection of a UE with a second TRP.

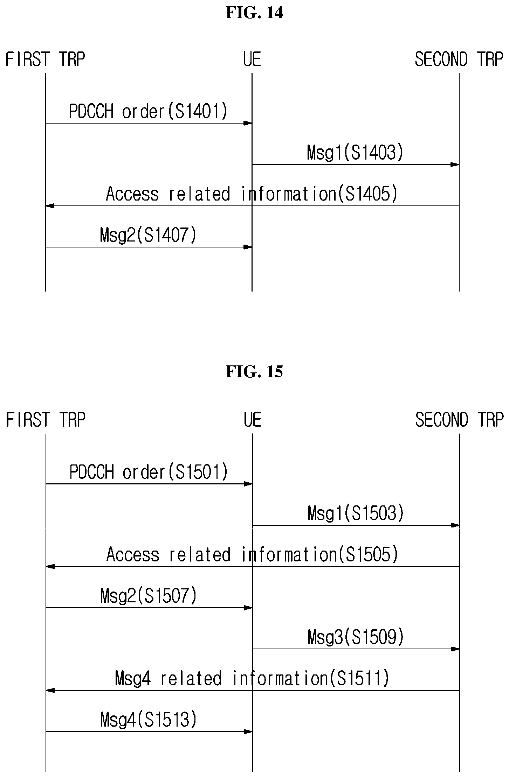

FIG. 14 illustrates a first example of a procedure for performing random access to a UL TRP according to an embodiment of the present disclosure. FIG. 14 exemplifies a signal exchange among a first TRP, a second TRP, and a UE.

Referring to FIG. 14, in step S1401, the first TRP transmits a PDCCH order to the UE. In other words, the first TRP transmits, to the UE, a command for performance of a random access procedure. The PDCCH order may indicate performance of contention based random access (CBRA) or contention free random access (CFRA). The PDCCH order may include at least one of an indication of performance of the random access procedure, information on a target of the random access procedure, or preamble allocation information for the random access procedure.

In step S1403, the UE transmits MSG1 (message 1) to the second TRP. In other words, the UE transmits a random access preamble. To this end, the UE may transmit at least one random access preamble using at least one of RAOs within a random access channel identified through system information or configuration information. Thus, the second TRP may determine at least one of a PL of a channel with the UE, a transmission timing of the UE, or a preferred transmission beam of the UE.

In step S1405, the second TRP transmits access-related information to the first TRP. That is, the second TRP shares the access-related information with the first TRP. For example, the access-related information may include at least one of information on a PL, information on a UL transmission timing (e.g., a TA), or information on a UL transmission beam.

In step S1407, the first TRP transmits MSG2 (message 2) to the UE. In other words, the first TRP transmits a random access response message to the UE. Here, the random access response message may include at least a part of the access-related information received from the second TRP. That is, the first TRP transmits the random access response message through the DL on behalf of the second TRP.

FIG. 15 illustrates a second example of a procedure for performing random access to a UL TRP according to an embodiment of the present disclosure. FIG. 15 exemplifies a signal exchange among a first TRP, a second TRP, and a UE.

Referring to FIG. 15, in step S1501, the first TRP transmits a PDCCH order to the UE. In other words, the first TRP transmits, to the UE, a command for performance of a random access procedure. The PDCCH order may indicate performance of CBRA or CFRA. The PDCCH order may include at least one of an indication of performance of the random access procedure, information on a target of the random access procedure, or preamble allocation information for the random access procedure.

In step S1503, the UE transmits MSG1 to the second TRP. In other words, the UE transmits a random access preamble. To this end, the UE may transmit at least one random access preamble using at least one of RAOs within a random access channel identified through system information or configuration information. Thus, the second TRP may determine at least one of a PL of a channel with the UE, a transmission timing of the UE, or a preferred transmission beam of the UE.

In step S1505, the second TRP transmits access-related information to the first TRP. That is, the second TRP shares the access-related information with the first TRP. For example, the access-related information may include at least one of information on the PL, information on a UL transmission timing (e.g., a TA), or information on a UL transmission beam.

In step S1507, the first TRP transmits MSG2 to the UE. In other words, the first TRP transmits a random access response message to the UE. Here, the random access response message may include at least a part of the access-related information received from the second TRP. That is, the first TRP transmits the random access response message through DL on behalf of the second TRP.

In step S1509, the UE transmits MSG3 to the second TRP. MSG3 may include a message requesting setup of an RRC connection. The UE may transmit MSG3 through an uplink resource allocated by a UL grant included in the random access response. MSG3 may include identification information of the UE.

In step S1511, the second TRP transmits MSG4 (message 4)-related information to the first TRP. That is, the second TRP shares access-related information with the first TRP. For example, the MSG4-related information may include information on contention resolution.

In step S1513, the first TRP transmits MSG4 to the UE. In other words, the first TRP transmits a response to MSG3 to the UE. Here, MSG4 may include at least a part of the MSG4-related information received from the second TRP. That is, the first TRP transmits MSG4 through DL on behalf of the second TRP.

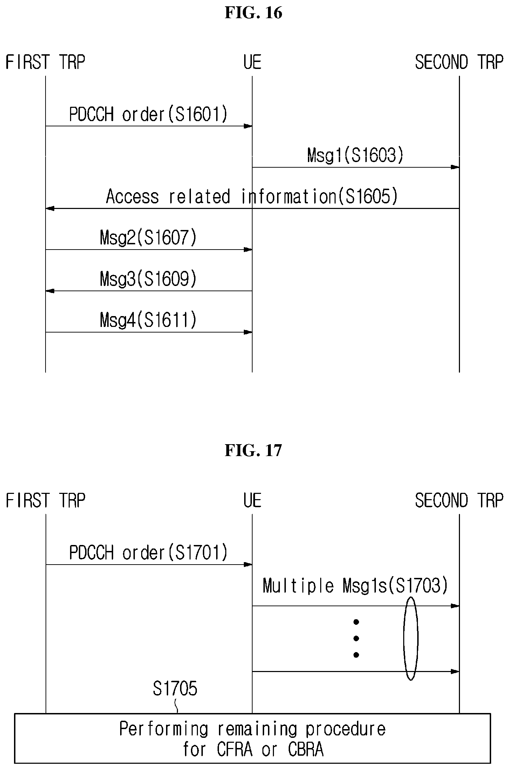

FIG. 16 illustrates a third example of a procedure for performing random access to a UL TRP according to an embodiment of the present disclosure. FIG. 16 exemplifies a signal exchange among a first TRP, a second TRP, and a UE.

Referring to FIG. 16, in step S1601, the first TRP transmits a PDCCH order to the UE. In other words, the first TRP transmits, to the UE, a command for performance of a random access procedure. The PDCCH order may indicate performance of CBRA or CFRA. The PDCCH order may include at least one of an indication of performance of the random access procedure, information on a target of the random access procedure, or preamble allocation information for the random access procedure.

In step S1603, the UE transmits MSG1 to the second TRP. In other words, the UE transmits a random access preamble. To this end, the UE may transmit at least one random access preamble using at least one of RAOs within a random access channel identified through system information or configuration information. Thus, the second TRP may determine at least one of a PL of a channel with the UE, a transmission timing of the UE, or a preferred transmission beam of the UE.

In step S1605, the second TRP transmits access-related information to the first TRP. That is, the second TRP shares the access-related information with the first TRP. For example, the access-related information may include at least one of information on the PL, information on a UL transmission timing (e.g., a TA), or information on a UL transmission beam.

In step S1607, the first TRP transmits MSG2 to the UE. In other words, the first TRP transmits a random access response message to the UE. Here, the random access response message may include at least a part of the access-related information received from the second TRP. That is, the first TRP transmits the random access response message through the DL on behalf of the second TRP.

In step S1609, the UE transmits MSG3 to the first TRP. MSG3 may include a message requesting setup of an RRC connection. The UE may transmit MSG3 through uplink resources allocated by a UL grant included in the random access response. MSG3 may include identification information of the UE.

In step S1611, the first TRP transmits MSG4 to the UE. In other words, the first TRP transmits a response to MSG3 to the UE. Here, MSG4 may include information on contention resolution.

According to the procedures described above, a random access procedure for a second TRP may be performed by a PDCCH order transmitted through a first TRP. Hereinafter, the present disclosure provides specific embodiments of each operation of the above-described procedures.

### Embodiments Related to the PDCCH Order

In FIGS. 14 to 16, a first TRP may instruct a UE, using a PDCCH order, to perform CBRA or CFRA to a second TRP. For example, the PDCCH order transmitted by the first TRP may be included in a DCI format 1_0 defined in 3GPP NR or may be included in a newly defined DCI format for a cross-TRP PDCCH order.

When allocation information on a preamble used for MSG1 transmission is present in the DCI transmitted through the PDCCH order, the UE may use the preamble to perform CFRA as in FIG. 14. When allocation information on the preamble used for MSG1 transmission is not present in the DCI transmitted through the PDCCH order, the UE may select a preamble for CBRA based on information configured by higher layer signaling such as an SIB, a MAC-CE, or RRC and perform CBRA as in FIG. 15 or FIG. 16. For example, when DCI format 1_0 is used in the PDCCH order, the allocation information on the preamble may include a random access preamble index. Here, when a corresponding field has a non-zero value, the UE may perform CFRA for the second TRP as in FIG. 14. On the other hand, when the field for the random access preamble index is zero, the UE may perform CBRA for the second TRP as in FIG. 15 or FIG. 16.

According to an embodiment, in FIGS. 14 to 16, a PDCCH order may include information indicating random access to a second TRP rather than a first TRP that transmits the PDCCH order. The information may be indicated in various manners. For example, the random access to the second TRP may be indicated using one bit within DCI used as the PDCCH order, indicated through a radio network temporary identifier (RNTI) used for cyclic redundancy check (CRC) scrambling, or indicated by reusing a specific field defined for another purpose within the DCI (e.g., filling with all 0s, filling with all 1s, or filling with bit values of a specific form). Alternatively, the above-described indication methods may be combined to indicate that random access to the second TRP rather than the first TRP is requested.

Rather than in a DL sTRP/UL 2TRP environment, in a DL sTRP/UL mTRP environment in which three or more UL TRPs are used, a base station may use a plurality of bits within DCI in order to indicate that RA is to a specific TRP. For example, when 2 bits are used, an indication of each UL mTRP may be mapped to a combination of 00, 01, 10, or 11, and in this case, an indication of one of up to four UL-dedicated TRPs is possible. However, when a corresponding indicator also expresses an indication of random access to a TRP that communicates in both DL and UL, an indication of up to three UL-dedicated TRPs is possible. In addition, a specific TRP among the mTRPs may be indicated through a plurality of RNTIs used for CRC scrambling, or a specific TRP among the mTRPs may be indicated by reusing a specific field used for another purpose within the DCI (e.g., using a specific bit pattern of 0s and 1s). Unlike the above-described methods, the procedure may be operated such that indication information on a TCI state is transmitted through the PDCCH order, and a specific TRP associated with the TCI state is configured and indicated.

As described above, when random access to another TRP, that is, a second TRP different from a first TRP transmitting a PDCCH order to a terminal is indicated, in a procedure such as that of FIGS. 14 to 16, a UE may recognize that a current random access procedure is for the second TRP. Accordingly, the UE may recognize information to be applied for UL transmission to the second TRP (e.g., information related to a TA, a path loss, and a transmission beam (Tx beam)) through signaling subsequently received through the first TRP. When information indicating that the random access to the second TRP is requested is not included, the UE is unable to distinguish whether a target for which the UE performs the random access is the first TRP or the second TRP, and ambiguity may thereby occur.

Instead of the above-described PDCCH order, indication information indicating that random access is to be performed to the second TRP rather than the first TRP may be signaled through MSG2, as exemplified in FIGS. 14 to 15. In this case, in the MSG1 step, the UE transmits a preamble based on information indicated and configured through the PDCCH order of the first TRP, and the fact that the random access is to the second TRP rather than the first TRP is indicated through MSG2. Then, in UL transmission to the second TRP, the UE may recognize and apply information to be applied for UL transmission to the second TRP (e.g., information related to a TA, a path loss, and a transmission beam) based on the indication and configuration information through MSG2.

### Embodiments Related to MSG1

In the above-described embodiments, a UE may transmit MSG1 using a preamble and a RA resource allocated through a PDCCH order. Here, information on a transmission beam required for MSG1 transmission may be provided through the PDCCH order. For example, reserved bit(s) or an existing field within the DCI that transmits the PDCCH order may be used to indicate transmission beam information through a resource index for an SSB or a CSI-RS. According to an embodiment, when DCI format 1_0 is used, a base station may indicate, through an SS/PBCH index, beam information to be used by the UE for MSG1 transmission.

In CFRA as in FIG. 14, when a DCI format 1_0-based PDCCH order is transmitted, a base station may indicate, through an SS/PBCH index indicated within DCI format 1_0, beam information that a UE is to use for MSG1 transmission. Alternatively, since the base station allocates RAO(s) based on an SS/PBCH index and a PRACH mask index indicated within DCI format 1_0, the base station may indicate information on a transmission beam through reserved bit(s) rather than the SS/PBCH index for flexibility of RAO allocation.

In CBRA as in FIG. 15 or FIG. 16, when a DCI format 1_0-based PDCCH order is transmitted, every random access preamble index indicated within DCI format 1_0 may be set to zero. In this case, since a field for an SS/PBCH index is defined as reserved bits, information on a transmission beam to be used for MSG1 transmission to the second TRP may be indicated using the field. The UE may perform CBRA based on the information on the beam.

According to another embodiment, information on a transmission beam may be configured through higher layer signaling such as a MAC-CE or RRC at a time point prior to MSG1 transmission, rather than being transmitted through DCI. In this case, TA information and path-loss-related information applicable in MSG1 transmission may be indicated or configured together.

Alternatively, the above-described methods and configuration information may be configured and indicated through a combination of a plurality of signaling schemes such as DCI, a MAC-CE, and RRC.

MSG1 may be transmitted in a beam sweeping scheme. Beam sweeping may be performed using one RAO or a plurality of RAOs. Beam sweeping of MSG1 may be performed as in FIG. 17.

FIG. 17 illustrates an example of a procedure for performing random access using beam sweeping according to an embodiment of the present disclosure. FIG. 17 exemplifies a procedure in which MSG1, that is, a random access preamble, is transmitted in a beam sweeping form using at least one RAO.

Referring to FIG. 17, in step S1701, a first TRP transmits a PDCCH order to a UE. In other words, the first TRP transmits, to the UE, a command for performance of a random access procedure. The PDCCH order may include at least one of an indication of performance of the random access procedure or preamble allocation information for the random access procedure. In addition, according to an embodiment, the PDCCH order may include configuration information on a transmission beam for MSG1. Alternatively, according to another embodiment, the configuration information on the transmission beam may be delivered through a separate message.

In step S1703, the UE transmits MSG1 to a second TRP. In other words, the UE transmits a random access preamble. Here, according to an embodiment, the UE repeatedly transmits the random access preamble, that is, performs beam sweeping. To this end, the UE may perform beam sweeping using at least one of RAOs within a random access channel identified through system information or configuration information.

In step S1705, the UE performs the remaining procedure for CFRA or CBRA. For example, the UE may signal MSG2, MSG3, MSG4, and the like with the first TRP and/or the second TRP. Thus, the UE may establish a connection with the second TRP and perform communication according to the DL sTRP/UL 2TRP scenario.

As in the procedure described with reference to FIG. 17, when the first TRP delivers configuration information on a plurality of transmission beams to the UE, the random access preamble may be transmitted in a beam sweeping form using the plurality of transmission beams configured by the first TRP. According to another embodiment, when the first TRP does not provide configuration information on a transmission beam to the UE, the UE may transmit the preamble in a beam sweeping form using arbitrary multiple transmission beams. Thus, the second TRP may estimate at least one transmission beam available for the UE for UL communication. Here, according to an embodiment, information on the at least one transmission beam that is available for the UE for UL communication may be indicated or delivered to the UE through MSG2.

According to an embodiment, beam sweeping of MSG1 may be performed within one RAO interval. In the embodiments described with reference to FIGS. 14 to 16, MSG1, that is, the random access preamble, is transmitted within one RAO. When the first TRP configures one transmission beam, the preamble may be transmitted in the one RAO using the configured transmission beam. When the first TRP delivers configuration information on a plurality of transmission beams to the UE, or when the first TRP fails to deliver configuration information on a transmission beam to the UE, the UE may transmit the preamble (e.g., MSG1) in at least one RAO in a beam sweeping scheme.

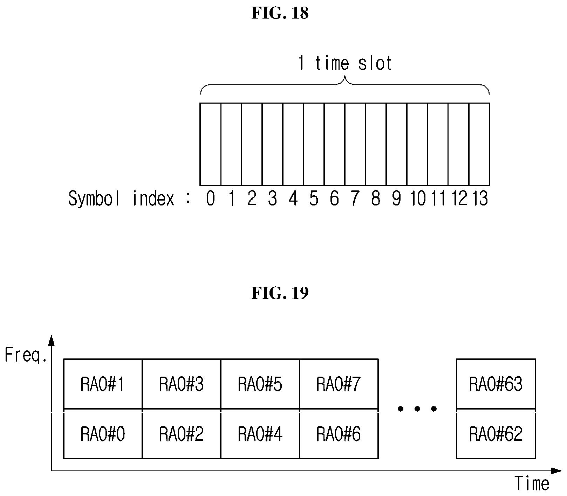

A slot structure for transmitting MSG1 in a beam sweeping scheme in at least one RAO is shown in FIG. 18. FIG. 18 illustrates an example of a structure of a slot in which beam sweeping is performed according to an embodiment of the present disclosure. Referring to FIG. 18, one time slot may be configured to include 14 symbols. For example, when at least one RAO is configured within the slot, the number of transmissions of the random access preamble through beam sweeping may be determined according to a preamble length and a length of the RAO interval. Specific examples of the number of transmissions according to the preamble length and the length of the RAO interval are shown in Table 14 below.

**[Table 14]**

| Case | Preamble length | Length of RAO interval | Number of MSG1 transmissions |
|---|---|---|---|
| 1 | 2 symbol | 1 time slot (0^{th} ~ 13^{th} symbol) | 7 |
| 2 | 2 symbol | 6 symbols (7^{th} ~ 12^{th} symbol) | 3 |
| 3 | 4 symbol | 8 symbols (0^{th} ~7^{th} symbol) | 2 |

Referring to FIG. 18 and Table 14, the following beam sweeping operation is feasible. It is assumed that the size of a RAO resource in the frequency domain is configured in FIG. 18. In Table 14, the preamble length refers to the number of symbols required for preamble transmission when the size of the frequency domain resource for the RAO resource is considered. The RAO interval is a resource that may be configured in a specific symbol region within a corresponding slot and refers to a time-axis resource occupied by one RAO. Accordingly, in case 1 of Table 14, the preamble length is 2 symbols, and one time slot is entirely configured as the RAO interval. In this case, a total of 7 MSG1 transmissions are possible through 14 symbols. That is, the UE may use 7 different transmission beams to repeatedly transmit the preamble 7 times within the slot and thus perform beam sweeping transmission. In case 2, since the preamble length is 2 symbols and the RAO interval is configured as 6 symbols, preamble transmission is feasible through beam sweeping including a total of 3 repeated transmissions. In case 3, since the preamble length is 4 symbols and the RAO interval is configured as 8 symbols, preamble transmission is feasible through beam sweeping including a total of 2 repeated transmissions. Configuration information on the above-described schemes may be configured and indicated by a combination of one or more of signaling schemes such as DCI including the PDCCH order information, a MAC-CE, and RRC.

As described above, beam sweeping of a random access preamble may be performed through one RAO. In other words, a plurality of transmissions may be performed in one RAO. This means that, in configuring a RAO interval, the RAO interval is to be configured to be longer than the length of the preamble. On the other hand, when a plurality of RAOs are used, beam sweeping is possible even if the RAO interval is not configured to be longer than the length of the preamble.

According to another embodiment, beam sweeping of MSG1 may be performed using a plurality of RAOs. When a first TRP delivers configuration information on a plurality of transmission beams to a UE, or when the first TRP fails to deliver configuration information on a transmission beam to the UE, the UE may transmit a random access preamble (e.g., MSG1) in a beam sweeping scheme using a plurality of RAOs. That is, when the first TRP delivers configuration information on a plurality of transmission beams to the UE, the UE may transmit the preamble in a beam sweeping scheme using the plurality of transmission beams configured by the first TRP. On the other hand, when the first TRP does not configure configuration information on at least one transmission beam for the UE, the UE may transmit the preamble in a beam sweeping form using arbitrary multiple transmission beams. Thus, a second TRP may estimate a transmission beam available for the UE to be used for UL communication, and information on the estimated transmission beam may be signaled to the UE through MSG2.

For beam sweeping transmission through a plurality of RAOs, the first TRP may allocate and configure temporally different RAOs to the UE. Information on resources for the RAOs may be signaled through one or a combination of two or more of RRC, a MAC-CE, and DCI.

When temporally consecutive RAOs are configured through DCI format 1_0, temporally different RAOs may be configured and/or allocated by utilizing some of the five reserved indices (e.g., indices 11 to 15 in Table 9) in a PRACH mask index indicated by a 4-bit field. For example, the configuration and allocation of temporally different RAOs may be signaled using a combination of the PRACH mask index and an SSB/PBCH index.

FIG. 19 illustrates an example of RAOs for random access according to an embodiment of the present disclosure. FIG. 19 shows an example in which two RAOs are arranged on the frequency axis and 32 RAOs are arranged on the time axis. Among the RAOs shown in FIG. 19, a UE is to be configured with or allocated a plurality of temporally different RAOs for beam sweeping of a preamble. For example, temporally consecutive RAOs in the same frequency resource region may be configured, such as RAO#0, RAO#2, and RAO#4. Alternatively, consecutive RAOs having a certain spacing on the time axis in the same frequency resource region may be configured, such as RAO#0, RAO#4, and RAO#8. Alternatively, RAOs that include different frequency resource regions and are consecutive on the time axis may be configured, such as RAO#0, RAO#3, and RAO#4. Alternatively, RAOs that include different frequency resource regions and are consecutive with a certain spacing on the time axis may be configured, such as RAO#0, RAO#5, and RAO#8.

The above-described schemes of MSG1 beam sweeping transmission in one RAO and/or MSG1 beam sweeping transmission using a plurality of RAOs may be operated in simply modified, extended, or combined forms.

### Embodiments Related to Access-Related Information

In the various embodiments described above, access-related information is delivered from a second TRP to a first TRP. According to the various embodiments, the access-related information may include the following information. The second TRP may deliver, to the first TRP, a transmission beam, a PL or a PL offset, or a TA or a TA offset acquired and estimated by receiving MSG1 transmitted by a UE as the access-related information. Here, the PL offset may indicate a difference between the PL between the first TRP and the UE and the PL between the second TRP and the UE, and the TA offset may indicate a difference of TA between the first TRP and the UE and a difference of TA between the second TRP and the UE. In addition, the information on the transmission beam may be delivered to the first TRP in the form of a TCI state. Alternatively, the information on the transmission beam may be delivered in the form of at least one of an RAO index, a symbol index, or preamble information from which MSG1 is received, or may be delivered in a combination of the listed parameters or in a modified form thereof.

### Embodiments Related to MSG2

A first TRP may transmit, to a UE, MSG2 including transmission beam information, PL information, and TA information that are required for UL transmission to a second TRP. At least one of the items included in MSG2 may be configured through a combination of at least one of DCI, a PDSCH, a MAC-CE, or RRC signaling.

The transmission beam information may be indicated using a UL TCI state. In this case, the PL information or the TA information related to the second TRP may be signaled in a scheme associated with the UL TCI state. One UL TCI state may be indicated in a scheme associated with a PL offset and a TA offset for the second TRP. Here, based on the association with the TCI state, information on the PL and the TA may be signaled to the UE only by indicating the UL TCI state.

### Embodiments Related to MSG3 and MSG4

In the embodiment described with reference to FIG. 15, in signaling for contention resolution, that is, signaling of MSG3 and MSG4, MSG3 may be transmitted to a second TRP. Since the second TRP is incapable of performing DL transmission, the second TRP may transmit information required for contention resolution to the first TRP. For example, the second TRP may transmit RNTI information of a UE to the first TRP. The RNTI may include a C-RNTI. Then, the first TRP may transmit MSG4 to the UE for contention resolution.

In the embodiment described with reference to FIG. 16, in signaling for contention resolution, that is, signaling of MSG3 and MSG4, a UE may transmit MSG3 to a first TRP. Then, the first TRP may transmit MSG4 to the UE for contention resolution.

According to the various embodiments described above, a random access procedure for a second TRP may be performed according to a PDCCH order that is transmitted through a first TRP. In the above-described embodiments, the first TRP supports DL and UL communication, and the second TRP supports only UL communication. The above-described embodiments may also be applied to other types of TRPs. For example, even when the first TRP is a TRP that performs a half-duplex (HD) operation and the second TRP is a TRP that performs a full-duplex (FD) operation, a PDCCH order indicating performance of random access to the second TRP through the first TRP may be transmitted according to the above-described embodiments. Here, an FD operation may be understood as transmission and reception through UL and DL subbands that are configured for subband full duplex (SBFD) in an SBFD symbol. Here, when RAOs for random access to the first TRP supporting the HD operation and RAOs for random access to the second TRP supporting the FD operation are separately allocated, a request for random access to the second TRP may be indicated by indicating use of an additional RAO allocated to the SBFD symbol.

Conversely, according to the above-described embodiments, a PDCCH order indicating performance of random access to the first TRP through the second TRP may be transmitted. Here, when RAOs for random access to the first TRP supporting the HD operation and RAOs for random access to the second TRP supporting the FD operation are separately allocated, a request for random access to the first TRP may be indicated by indicating use of a legacy RAO allocated to a non-SBFD symbol.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-stage language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of operating a terminal in a wireless communication system, the method comprising:
performing a first random access procedure to access a base station including a first transmission-reception point (TRP) and a second TRP;
receiving a physical downlink control channel (PDCCH) order from the first TRP; and
performing a second random access procedure for the second TRP based on the PDCCH order.

2. The method of claim 1, wherein the PDCCH order includes information that indicates or induces performance of a random access procedure for the second TRP.

3. The method of claim 2, wherein the information includes at least one of an explicit indicator, a radio network temporary identifier (RNTI) for cyclic redundancy check (CRC) scrambling, a specific bit pattern of a designated field, or a transmission configuration information (TCI) state associated with the second TRP.

4. The method of claim 1, wherein the performing of the second random access procedure comprises:
performing a contention free random access (CFRA) procedure based on allocation information on a preamble being included in the PDCCH order; and
performing a contention based random access (CBRA) procedure based on the allocation information on the preamble not being included in the PDCCH order.

5. The method of claim 1, wherein the performing of the second random access procedure comprises:
transmitting a random access preamble to the second TRP; and
receiving a random access response message from the first TRP.

6. The method of claim 5, wherein the random access response message includes information indicating performance of a random access procedure for the second TRP.

7. The method of claim 5, wherein the performing of the second random access procedure comprises performing UL transmission to the second TRP based on at least one parameter for UL transmission included in the random access response message, and
wherein the at least one parameter relates to at least one of a timing advance (TA), a path loss, or a transmission beam.

8. The method of claim 5, wherein the transmitting of the random access preamble to the second TRP comprises transmitting the random access preamble based on information on a transmission beam included in the PDCCH order.

9. The method of claim 5, wherein the transmitting of the random access preamble to the second TRP comprises transmitting the random access preamble based on information on a transmission beam included in a message received prior to reception of the PDCCH order.

10. The method of claim 1, wherein the performing of the second random access procedure comprises repeatedly transmitting a random access preamble through beam sweeping using a plurality of transmission beams.

11. The method of claim 10, wherein the plurality of transmission beams are used when information on the plurality of transmission beams is provided from the first TRP, or when information on a transmission beam for transmission of a RACH preamble to the second TRP is not provided by the first TRP.

12. The method of claim 10, wherein the performing of the second random access procedure comprises:
receiving a random access response message including information on at least one beam among the plurality of transmission beams; and
performing UL transmission to the second TRP using the at least one beam.

13. The method of claim 10, wherein a number of repeated transmissions of the RACH preamble through the beam sweeping is determined based on a length of a random access occasion (RAO) interval within a slot and a length of the random access preamble.

14. The method of claim 10, further comprising receiving allocation information on a plurality of RAOs for the beam sweeping.

15. A method of operating a base station in a wireless communication system, the method comprising:
performing a first random access procedure for access of a terminal;
transmitting a physical downlink control channel (PDCCH) order to the terminal through a first transmission-reception point (TRP); and
performing a second random access procedure for a second TRP based on the PDCCH order.

16. The method of claim 15, wherein the PDCCH order includes information that indicates or induces performance of a random access procedure for the second TRP.

17. The method of claim 16, wherein the information includes at least one of an explicit indicator, a radio network temporary identifier (RNTI) for cyclic redundancy check (CRC) scrambling, a specific bit pattern of a designated field, or a transmission configuration information (TCI) state associated with the second TRP.

18. The method of claim 15, wherein the performing of the second random access procedure comprises:
receiving a random access preamble from the terminal through the second TRP; and
transmitting a random access response message through the first TRP.

19. A terminal in a wireless communication system, the terminal comprising:
at least one transceiver;
at least one processor; and
at least one memory operably coupled to the at least one processor and storing instructions that, when executed by the processor, control the terminal to perform operations,
wherein the operations comprise:
performing a first random access procedure to access a base station including a first transmission-reception point (TRP) and a second TRP;
receiving a physical downlink control channel (PDCCH) order from the first TRP; and
performing a second random access procedure for the second TRP based on the PDCCH order.

20. A base station in a wireless communication system, the base station comprising:
at least one transceiver;
at least one processor; and
at least one memory operably coupled to the at least one processor and storing instructions that, when executed by the processor, control the base station to perform operations,
wherein the operations comprise:
performing a first random access procedure for access of a terminal;
transmitting a physical downlink control channel (PDCCH) order to the terminal through a first transmission-reception point (TRP); and
performing a second random access procedure for a second TRP based on the PDCCH order.
